# EUROPÄISCHE PATENTSCHRIFT

(11) **EP 4 381 015 B1**
(45) Veröffentlichungstag und Bekanntmachung des Hinweises auf die Patenterteilung: **02.09.2026**
(21) Anmeldenummer: 22758221.0
(22) Anmeldetag: 01.08.2022
(51) Int. Cl.: C08L 69/00

(54) **POLYCARBONAT-ZUSAMMENSETZUNGEN MIT HOHEM CTI**
POLYCARBONATE COMPOSITIONS WITH HIGH CTI
COMPOSITIONS DE POLYCARBONATE À IRC ÉLEVÉ

(30) Priorität: 04.08.2021 EP 21189667
(43) Veröffentlichungstag der Anmeldung: 12.06.2024
(73) Patentinhaber: Covestro Deutschland AG, 51373 Leverkusen (DE)
(72) Erfinder: HUNGERLAND, Tim, 51063 Köln (DE); NOLTE, Marius, 50933 Köln (DE); KNAUPP, Matthias, 40764 Langenfeld (DE)
(74) Vertreter: Levpat
(86) Internationale Anmeldenummer: PCT/EP2022/071497
(87) Internationale Veröffentlichungsnummer: WO 2023/012085

(56) Entgegenhaltungen:
- EP-A2- 3 560 997
- CN-B- 108 102 331
- JP-A- H09 279 005
- US-A1- 2018 187 003
- US-A1- 2019 137 050

## Beschreibung

Die Erfindung betrifft flammgeschützte thermoplastische Zusammensetzungen auf Basis von Polycarbonat mit hoher Kriechstromfestigkeit.

Polycarbonat bietet aufgrund seiner hohen Schlagzähigkeit, der hohen Wärmeformbeständigkeit und einer gewissen inhärenten Flammwidrigkeit viele Vorteile gegenüber anderen thermoplastischen Polymeren. Aufgrund dieses einzigartigen Eigenschaftsprofils eignen sich Polycarbonat-Zusammensetzungen für eine Vielzahl unterschiedlicher Anwendungen, z.B. im Bereich elektrischer und elektronischer Bauteile. Dabei sind insbesondere gute Isoliereigenschaften und hohe Flammwidrigkeit wesentliche sicherheitsrelevante Grundanforderungen an eingesetzte Materialien in diesem Bereich. In Anwendungen, bei denen der Kunststoff in direktem Kontakt zu den elektrischen Leiterbahnen ist, wird eine hohe Resistenz gegenüber Kriechströmen unter Spannungslast vorausgesetzt, damit es innerhalb des Bauteils nicht zu Kurzschlüssen und damit zum Brand kommt.

Kriechstromfestigkeit (CTI, "comparative tracking index") beschreibt im Allgemeinen die Widerstandsfähigkeit eines Kunststoffmaterials gegenüber Umwelteinflüssen. Der CTI-Wert ist dabei ein Maß für die Neigung eines Kunststoffes, unter Umwelteinflüssen, wie z.B. Feuchtigkeit und Verschmutzungen, unter Spannung elektrisch leitfähige Pfade an der Oberfläche auszubilden und daraus resultierende elektrische Kriechströme zu begünstigen. Je höher der Kriechstromwiderstand bzw. die Kriechstromfestigkeit (der CTI-Wert) eines Materials ist, desto besser eignet es sich für den Einsatz in Hochspannungsanwendungen, z.B. in Anwendungen der heutigen Elektromobilität. Ein weiterer Vorteil von Materialien mit hohem CTI-Wert ist die Möglichkeit, dass elektrische Leiterbahnen in einem elektronischen Bauteil näher beieinanderliegen können, ohne einen Kurzschluss zu riskieren, was wiederum die Reduktion der Bauteildimensionen und somit kompaktere Bauweisen und Gewichtsersparnis ermöglicht.

Polycarbonat an sich hat im Gegensatz zu anderen thermoplastischen Polymeren wie Polystyrol, Polyester etc. eine sehr geringe Kriechstromfestigkeit bei moderater Flammwidrigkeit. Wegen des hohen Anteils an aromatischen Strukturen besitzt Polycarbonat eine recht hohe Tendenz zur Verkohlung. Der CTI von reinem Polycarbonat liegt bei etwa 250 V oder sogar darunter (F. Acquasanta et al., Polymer Degradation and Stability, 96 (2011), 2098-2103). Für zahlreiche Anwendungen im Elektro/Elektrik-Bereich (EE), z.B. im Bereich der Elektromobilität, wird jedoch aus Sicherheitsgründen ein hoher CTI, typischerweise von 600 V (entsprechend der Isolierstoffgruppe PLC 0 nach EN 50124), der eingesetzten Materialien gefordert. Gleichzeitig müssen die Materialien eine hohe Flammwidrigkeit, d.h. eine V0-Klassifizierung nach UL 94V, insbesondere auch bei dünnen Wandstärken, aufweisen.

Reines Polycarbonat besitzt typischerweise zwar bereits eine gewisse intrinsische Flammwidrigkeit (V2-Klassifizierung nach UL 94 V), die allerdings für die meisten Anwendungen im EE-Bereich nicht ausreichend ist. Um die erforderliche V0-Klassifizierung gemäß UL94V zu erreichen, ist der Zusatz von geeigneten Flammschutzmitteln erforderlich. Typischerweise werden für Polycarbonat halogenierte Sulfonate (z.B. Rimar Salz (Kaliumperfluorbutansulfonat, C4-Salz) oder KSS-Salz (Kaliumdiphenylsulfon-3-sulfonat)) oder auch organische Phosphate (z.B. Bisphenol-A-bis(diphenylphosphat) (BDP), Resorcinol-bis(diphenylphosphat) (RDP)) oder Phosphazene eingesetzt. Der Wirkmechanismus dieser Flammschutzmittel basiert auf der Ausbildung einer festen, verkohlten Oberflächenschicht, die die Sauerstoffzufuhr unterbricht und somit den Verbrennungsprozess hemmt.

Der zugrundeliegende Effekt für eine gute Kriechstromfestigkeit ist unter anderem eine niedrige Tendenz zur Ausbildung von leitfähigen Pfaden an der Oberfläche. Dies steht in direktem Gegensatz zum Wirkmechanismus, dem "Charring", von oberflächenaktiven Flammschutzmitteln und bereitet damit eine besondere Herausforderung in der Abstimmung von CTI und Flammwidrigkeit.

Thermoplastische Polycarbonatzusammensetzungen mit guter Kriechfestigkeit und Flammwidrigkeit sind aus US2018/0187003 A1 bekannt.

Es bestand somit die Aufgabe, Polycarbonat-basierte Zusammensetzungen bereitzustellen, die eine UL94 V0-Klassifizierung bei 3 mm, bevorzugt bei 2 mm, besonders bevorzugt bei 1,5 mm, erreichen als auch einen hohen CTI von insbesondere 600 V, vorzugsweise bestimmt nach der Schnellprüfmethode in Anlehnung an IEC 60112:2009, aufweisen. Aufgrund des Anwendungsbereiches und der Wärmeentwicklung in EE-Bauteilen sollten die Zusammensetzungen bevorzugt auch eine gute Wärmeformbeständigkeit aufweisen, insbesondere eine Vicat-Erweichungstemperatur, bestimmt nach ISO 306:2014-3, VST Methode B, von mindestens 110°C.

Überraschend hat sich gezeigt, dass dieses durch spezielle Kombinationen von Polycarbonat mit Polyethylen (PE) in Kombination mit Phosphor-haltigem Flammschutzmittel und mit Fluor-haltigem Antitropfmittel gelingt.

Gegenstand der Erfindung ist somit eine thermoplastische Zusammensetzung, welche frei von Flammschutzmitteln, ausgewählt aus der Gruppe der Alkali-, Erdalkali-, Ammoniumsalze von aliphatischen oder aromatischen Sulfonsäure-, Sulfonamid- oder Sulfonimidderivaten, ist, enthaltend
A) mindestens 70 Gew.-% aromatisches Polycarbonat,
B) > 2,0 Gew.-% bis 6,0 Gew.-% Polyethylen,
C) 2,5 Gew.-% bis < 8,0 Gew.-% phosphorhaltiges Flammschutzmittel,
D) 0,2 Gew.-% bis 2,0 Gew.-% fluorhaltiges Antitropfmittel, wobei mindestens 0,5 Gew.-% fluorhaltiges Antitropfmittel enthalten sind, wenn die Zusammensetzung > 4,0 Gew.-% Polyethylen enthält,
und wobei sich die Gew.-%-Angaben auf die Gesamtzusammensetzung beziehen.

Gegenstand der Erfindung sind ebenso Formteile, hergestellt aus den erfindungsgemäßen thermoplastischen Zusammensetzungen, d.h. Formteile, bestehend aus einer erfindungsgemäßen thermoplastischen Zusammensetzung oder umfassend einen Bereich aus einer erfindungsgemäßen thermoplastischen Zusammensetzung. Derartige Formteile sind insbesondere solche, bei denen vorgenanntes Eigenschaftsprofil besonders attraktiv ist, d.h. Formteile, die Bauteile oder die Teile von Bauteilen aus dem EE-Bereich sind, insbesondere Teile von Hochspannungsschaltern, Wechselrichtern, Relais, elektronischen Verbindern, elektrischen Verbindern, Schutzschaltern, Bauteilen für Photovoltaikanwendungen, elektrischen Motoren, Kühlkörpern, Ladegeräten und -steckern für elektrische Fahrzeuge, Elektroanschlusskästen, Smart Meter Gehäusen, Miniaturtrennschaltern, Stromsammelschienen. Bevorzugt ist das Bauteil auf eine Betriebsspannung von mindestens 400 V ausgelegt. Hierzu weist das zweckmäßigerweise eingesetzte Material vorzugsweise eine Kriechstromfestigkeit von mindestens 600 V, bestimmt wie nachfolgend im Beispielteil beschrieben nach dem Schnellprüfverfahren in Anlehnung an IEC 60112:2009, auf.

Die erfindungsgemäße Zusammensetzung kann neben den Komponenten A, B, C, D weitere Komponenten, etwa weitere Additive in Form der Komponente E, enthalten. Auch kann die Zusammensetzung einen oder mehrere weitere Thermoplasten als Blendpartner (Komponente F) enthalten, welche durch keine der Komponenten A bis E abgedeckt sind. Im Rahmen der vorliegenden Erfindung beziehen sich die angegebenen Gew.-% der Komponenten A, B, C, D und ggf. E sowie ggf. Blendpartner- soweit nicht explizit anders angegeben - jeweils auf das Gesamtgewicht der Zusammensetzung. Es versteht sich, dass sämtliche in einer erfindungsgemäßen Zusammensetzung enthaltenen Komponenten zusammen 100 Gew.-% ergeben. Sofern für einen Zahlenbereich die Obergrenze mit "bis X" angegeben ist, schließt das den genannten Zahlenwert mit seinem Rundungsbereich nach oben hin ein.

Als Blendpartner geeignete, von den Komponenten A, B und E verschiedene, thermoplastische Polymere sind beispielsweise Polystyrol, Styrol-Copolymere, aromatische Polyester wie Polyethylenterephthalat (PET) oder Polybutylenterephthalat (PBT), PET-Cyclohexandimethanol-Copolymer (PETG), Polyethylennaphthalat (PEN), PMMA und PMMA-Copolymere sowie Copolymere mit Styrol wie z.B. transparentes Polystyrolacrylnitril (PSAN) oder aber auch thermoplastische Polyurethane. Bevorzugt werden diese Blendpartner in Konzentrationen von 0,5 Gew.-% bis 10 Gew.-% eingesetzt.

Ganz besonders bevorzugt enthalten die vorbeschriebenen Zusammensetzungen aber keine weiteren Komponenten, sondern die Mengen der Komponenten A, B, C, D und ggf. E, insbesondere in den beschriebenen bevorzugten Ausführungsformen, ergänzen sich zu 100 Gew.-%, d. h. die erfindungsgemäßen Zusammensetzungen bestehen aus den Komponenten A, B, C, D, ggf. E.

Es versteht sich, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Die erfindungsgemäßen Zusammensetzungen zeigen bei Applikation von mindestens 50 Tropfen einer 0,1%-igen Ammoniumchlorid-Lösung bei 375 V, weiter bevorzugt bei 400 V, besonders bevorzugt bei 600 V keinen signifikanten Kriechstrom (> 0,5 A über 2s), wobei die Prüfung vorzugsweise nach dem in dem Beschreibungsteil beschriebenen Schnellprüfverfahren in Anlehnung an IEC 60112:2009 erfolgt. Bevorzugt besitzen die erfindungsgemäßen Zusammensetzungen eine Flammwidrigkeit V0 nach UL 94 V in Dicken der Prüfkörper von 3 mm, weiter bevorzugt bei Dicken der Prüfkörper von 2 mm, noch weiter bevorzugt außerdem von mindestens V1 bei 1,5 mm, jeweils nach Konditionierung der Prüfkörper für 7 Tage bei 50 % relativer Luftfeuchte und 70°C Umgebungstemperatur. Bevorzugt besitzen die Zusammensetzungen neben dem hohen CTI und der guten Flammwidrigkeit auch eine gute Wärmeformbeständigkeit, welche sich in einer Vicat-Erweichungstemperatur, bestimmt nach ISO 306:2014-3, VST Methode B, von mindestens 110°C zeigt.

Es ist daher auch die Verwendung von > 2,0 Gew.-% bis 6,0 Gew.-%, bevorzugt bis < 5,0 Gew.-% Polyethylen, 2,5 bis < 8,0 Gew.-% phosphorhaltigem Flammschutzmittel und 0,2 bis 2,0 Gew.-% fluorhaltigem Antitropfmittel, wobei sich die Gew.-%-Angaben auf die resultierende Gesamtzusammensetzung beziehen, zur Erzielung eines CTI von 600V und einer UL94 V0-Klassifizierung bei einer Prüfkörperdicke von 3 mm, bevorzugt bei einer Prüfkörperdicke von 2 mm, weiter bevorzugt außerdem von mindestens V1 bei 1,5 mm, insbesondere nach Konditionierung der Prüfkörper für 7 Tage bei 50 % relativer Luftfeuchte und 70°C Umgebungstemperatur, bei einer thermoplastischen Zusammensetzung, enthaltend mindestens 70 Gew.-% aromatisches Polycarbonat, Gegenstand der Erfindung.

Die als bevorzugt, besonders bevorzugt etc. für die Zusammensetzung genannten Merkmale gelten selbstverständlich auch im Hinblick auf die erfindungsgemäße Verwendung.

Die einzelnen Bestandteile der erfindungsgemäßen Zusammensetzungen sind im Folgenden noch näher erläutert:

### Komponente A

Komponente A der erfindungsgemäßen Zusammensetzungen sind aromatische Polycarbonate.

Aromatische Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate, einschließlich der thermoplastischen, aromatischen Polyestercarbonate, haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Die Schmelzevolumenfließrate MVR des eingesetzten aromatischen Polycarbonats, bestimmt gemäß ISO 1133:2012-03, bei einer Prüftemperatur 300°C und 1,2 kg Belastung, beträgt bevorzugt 5 bis 35 cm³/(10 min), weiter bevorzugt 6 cm³/(10 min) bis 25 cm³/(10 min), noch weiter bevorzugt 6 bis 21 cm³/(10 min).

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polyestercarbonate wird ein Teil der Kohlensäurederivate durch aromatische Dicarbonsäuren oder Derivate der Dicarbonsäuren ersetzt, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 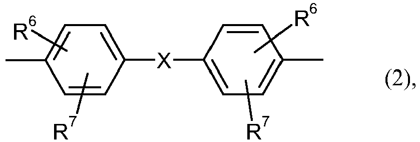 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl-oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (3)

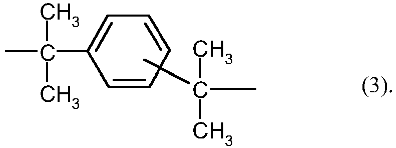

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie Dihydroxyarylverbindungen (I) bis (III) 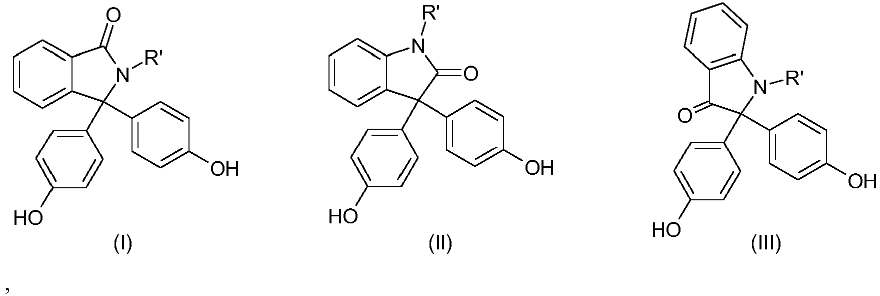 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 835 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden zwei oder mehr Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan beziehungsweise der beiden Monomere Bisphenol A und 4,4'-Dihydroxydiphenyl, sowie von den Dihydroxyarylverbindungen der Formeln (I), (II) und/oder (III) 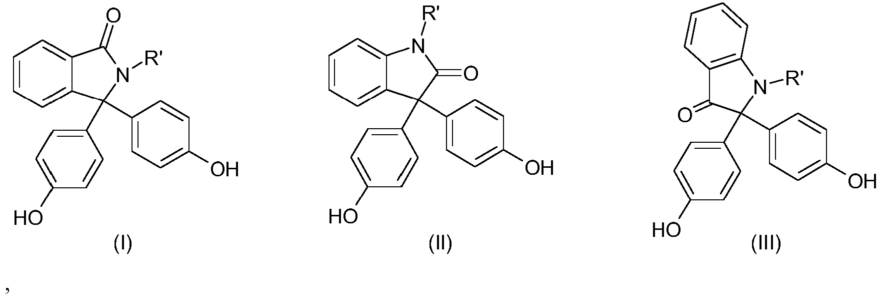 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Ganz besonders bevorzugt umfasst das aromatische Polycarbonat ein Bisphenol A-basiertes Homopolycarbonat. Äußerst bevorzugt ist das aromatische Polycarbonat Bisphenol A-basiertes Homopolycarbonat.

Der Gesamtanteil der Monomereinheiten beruhend auf den Formeln (I), (II), (III), 4,4'-Dihydroxydiphenyl und/oder Bisphenol TMC im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Dihydroxyarylverbindungen).

Die relative Lösungsviskosität der Copolycarbonate, bestimmt nach ISO 1628-4:1999, liegt bevorzugt im Bereich von = 1,15 - 1,35.

Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Bevorzugt sind auch Copolycarbonate, zu deren Herstellung Diphenole der allgemeinen Formel (4a) eingesetzt wurden: 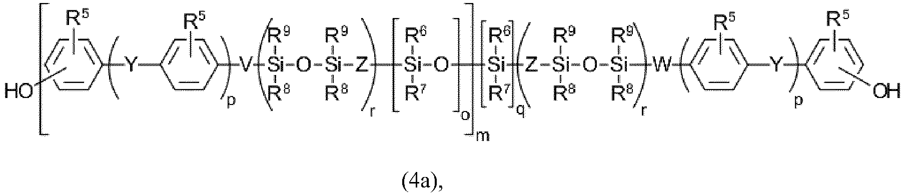 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁- bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (4a) über Terephthalsäure und/oder Isophthalsäure miteinander unter Ausbildung von Estergruppen verknüpft sind.

Insbesondere bevorzugt sind (Poly)Siloxane der Formeln (5) und (6) 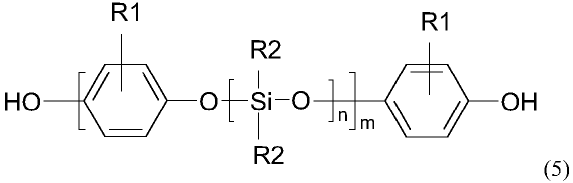 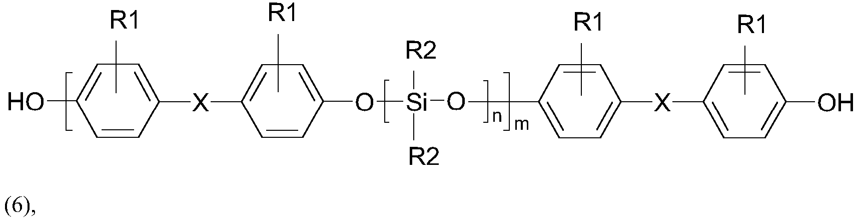
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 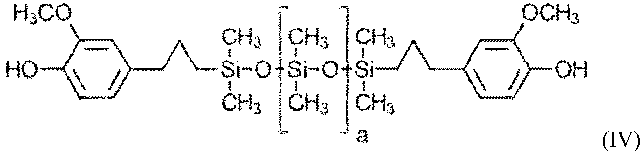 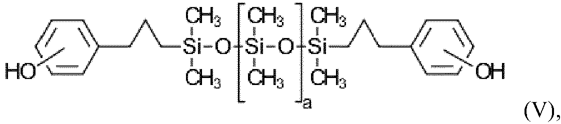 bevorzugt (Va) 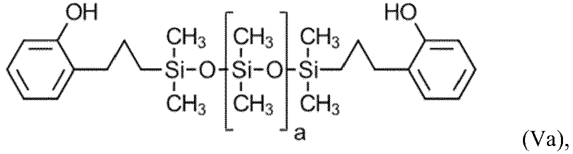 oder 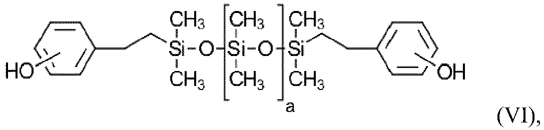 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (4a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (4a) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die erfindungsgemäßen Zusammensetzungen enthalten mindestens 70 Gew.-%, bevorzugt mindestens 75 Gew.-%, weiter bevorzugt mindestens 78 Gew.-%, noch weiter bevorzugt > 79,0 Gew.-%, besonders bevorzugt mindestens 83 Gew.-%, ganz besonders bevorzugt 85 Gew.-% bis < 95,3 Gew.-%, insbesondere bis 93,8 Gew.-%, aromatisches Polycarbonat, basieren also auf aromatischem Polycarbonat.

### Komponente B

Komponente B ist ein Polyethylen. Bevorzugt ist Komponente B ein HDPE (High Density Polyethylene), HMWPE (High Molecular Weight Polyethylene), UHMWPE (Ultra High Molecular Weight PE) oder eine Kombination hiervon.

HDPE ist üblicherweise schwach verzweigt und weist eine Dichte von 0,94-0,97 g/cm³, bestimmt nach ASTM D1505-18, auf. Das gewichtsmittlere Molekulargewicht beträgt vorzugsweise ≥ 200.000 g/mol, bestimmt mittels Hochtemperatur-GPC in 1,2,4-Trichlorbenzol.

HMWPE weist üblicherweise ein Molekulargewicht M_{w} von 500.000-1.000.000 g/mol, bestimmt mittels Hochtemperatur-GPC in 1,2,4-Trichlorbenzol, auf.

UHMWPE weist üblicherweise ein Molekulargewicht M_{w} von > 1.000.000 bis zu 6.000.000 g/mol, bevorzugt von 4.000.000 bis 6.000.000, bestimmt mittels Hochtemperatur-GPC in 1,2,4-Trichlorbenzol, auf, die Dichte beträgt 0,93-0,94 g/cm³, bestimmt nach ASTM D1505-18.

Der Anteil von Komponente B in den erfindungsgemäßen Zusammensetzungen beträgt > 2,0 Gew.-% bis 6,0 Gew.-%, bevorzugt bis < 5,0 Gew.-%, weiter bevorzugt 3 Gew.-% bis 4 Gew.-%, besonders bevorzugt 3,0 bis 4,0 Gew.-%, bezogen auf die Gesamtzusammensetzung.

### Komponente C

Bei Komponente C der erfindungsgemäßen Zusammensetzungen handelt es sich um Phosphor-haltige Flammschutzmittel. Es kann sich um ein einziges Phosphor-haltiges Flammschutzmittel handeln, aber auch um eine Mischung verschiedener Phosphor-haltiger Flammschutzmittel.

Bevorzugte Phosphor-haltige Flammschutzmittel sind cyclische Phosphazene, Phosphorverbindungen der Formel (10) und deren Mischungen: 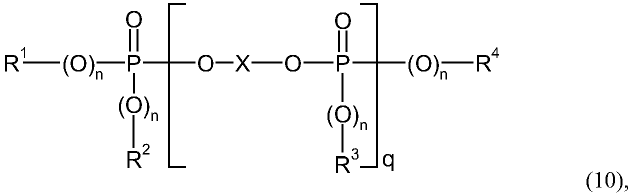 worin
R¹, R², R³ und R⁴ unabhängig voneinander für einen C₁- bis C₈-Alkylrest, jeweils gegebenenfalls halogeniert und jeweils verzweigt oder unverzweigt, und/oder C₅- bis C₆-Cycloalkylrest, C₆- bis C₂₀-Arylrest oder C₇- bis C₁₂-Aralkylrest, jeweils gegebenenfalls durch verzweigtes oder unverzweigtes Alkyl und/oder Halogen, vorzugsweise Chlor und/oder Brom, substituiert,
n unabhängig voneinander 0 oder 1,
q einen Wert von 0 bis 30 und
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten.

Bevorzugt stehen R¹, R², R³ und R⁴ unabhängig voneinander für verzweigtes oder unverzweigtes C₁- bis C₄-Alkyl, Phenyl, Naphthyl oder mit C₁- bis C₄-Alkyl substituiertes Phenyl. Im Falle aromatischer Gruppen R¹, R², R³ und/oder R⁴ können diese ihrerseits mit Halogen- und/oder Alkylgruppen, vorzugsweise Chlor, Brom und/oder C₁- bis C₄-Alkyl, verzweigt oder unverzweigt, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (10) leitet sich bevorzugt von Dihydroxyarylverbindungen ab.

X in Formel (10) steht besonders bevorzugt für 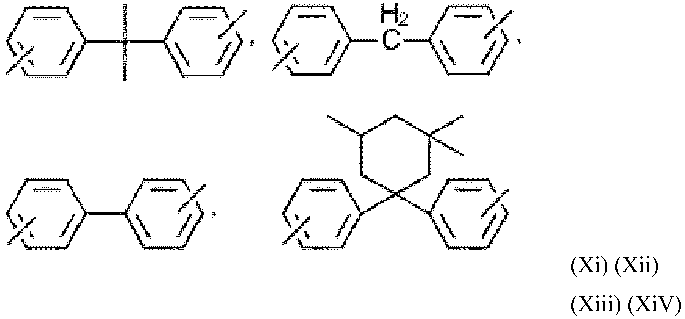 oder deren chlorierte und/oder bromierte Derivate. Bevorzugt leitet sich X (mit den angrenzenden Sauerstoffatomen) von Hydrochinon, Bisphenol A oder Diphenylphenol ab. Ebenfalls bevorzugt leitet sich X von Resorcin ab. Besonders bevorzugt leitet sich X von Bisphenol A ab. n in der Formel (10) ist vorzugsweise gleich 1. q steht bevorzugt für 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00 und besonders bevorzugt von 1,08 bis 1,60.

Als Phosphorverbindung der allgemeinen Formel (10) ist eine Verbindung der Formel (11) bevorzugt: 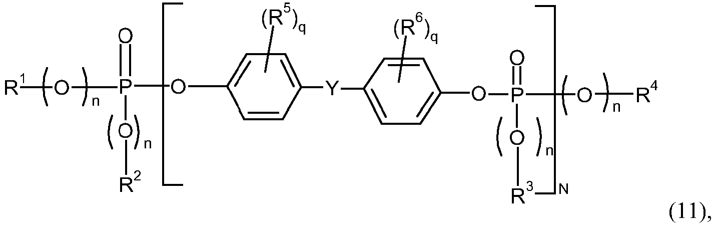 worin
R¹, R², R³ und R⁴ jeweils unabhängig voneinander einen linearen oder verzweigten C₁- bis C₈-Alkylrest und/oder gegebenenfalls durch lineares oder verzweigtes Alkylsubstituierten C₅- bis C₆-Cycloalkylrest, C₆- bis C₁₀-Arylrest oder C₇- bis C₁₂-Aralkylrest,
n unabhängig voneinander 0 oder 1,
q unabhängig voneinander 0, 1, 2, 3 oder 4,
N eine Zahl zwischen 1 und 30,
R₅ und R₆ unabhängig voneinander lineares oder verzweigtes C₁- bis C₄-Alkylrest, vorzugsweise Methylrest, und
Y lineares oder verzweigtes C₁- bis C₇-Alkyliden, einen linearen oder verzweigten C₁- bis C₇-Alkylenrest, C₅- bis C₁₂-Cycloalkylenrest, C₅- bis C₁₂-Cycloalkylidenrest, -O-, -S-, -SO-, SO₂ oder -CO- bedeuten.

Phosphorverbindungen der Formel (10) sind insbesondere Tributylphosphat, Triphenylphosphat, Trikresylphosphat, Diphenylkresylphosphat, Diphenyloctylphosphat, Diphenyl-2-ethyl-kresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (10), die sich vom Bisphenol A ableiten, ist insbesondere bevorzugt.

Weiter bevorzugt werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung des Phosphorverbindungsgemisches (Molekulargewichtsverteilung) bestimmt wird und daraus die Mittelwerte für q berechnet werden.

Besonders bevorzugt ist auf Bisphenol A-basierendes Oligophosphat (Bisphenol-A-bis(diphenylphosphat)) gemäß Formel (12) mit q = 1 bis 20, insbesondere mit q = 1,0 bis 1,2, in den erfindungsgemäßen Zusammensetzungen enthalten.

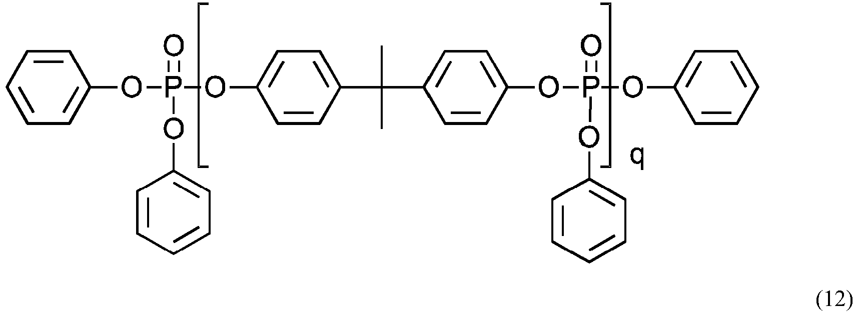

Derartige Phosphorverbindungen sind bekannt (vgl. z.B. EP 0 363 608 A1, EP 0 640 655 A2) oder lassen sich nach bekannten Methoden in analoger Weise herstellen (z.B. Ullmanns Enzyklopädie der technischen Chemie, Bd. 18, S. 301 ff., 1979; Houben-Weyl, Methoden der organischen Chemie, Bd. 12/1, S. 43; Beilstein Bd. 6, S. 177).

Ebenso bevorzugt wie die Phosphorverbindungen gemäß Formel (10) können als Komponente C cyclische Phosphazene gemäß Formel (13) eingesetzt werden: 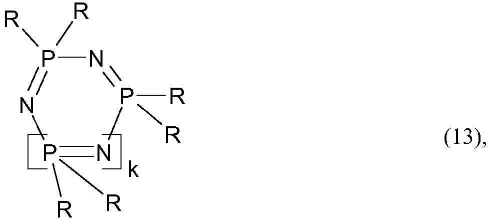 wobei
- R: jeweils gleich oder verschieden ist und für
- einen Aminrest,
- einen jeweils gegebenenfalls halogenierten, vorzugsweise mit Fluor halogenierten, weiter bevorzugt monohalogenierten, C₁- bis C₈-Alkylrest, vorzugsweise Methylrest, Ethylrest, Propylrest oder Butylrest,
- einen C₁- bis C₈- Alkoxyrest, vorzugsweise einen Methoxyrest, Ethoxyrest, Propoxyrest oder Butoxyrest,
- einen jeweils gegebenenfalls durch Alkyl, vorzugsweise C₁- bis C₄-Alkyl, und/oder Halogen, vorzugsweise Chlor und/oder Brom, substituierten C₅- bis C₆-Cycloalkylrest,
- einen jeweils gegebenenfalls durch Alkyl, vorzugsweise C₁- bis C₄-Alkyl, und/oder Halogen, vorzugsweise Chlor, Brom, und/oder Hydroxy-substituierten, C₆- bis C₂₀-Aryloxyrest, vorzugsweise Phenoxyrest, Naphthyloxyrest,
- einen jeweils gegebenenfalls durch Alkyl, vorzugsweise C₁- bis C₄-Alkyl, und/oder Halogen, vorzugsweise Chlor und/oder Brom, substituierten C₇- bis C₁₂-Aralkylrest, vorzugsweise Phenyl- C₁- bis C₄-alkylrest, oder
- einen Halogen-Rest, vorzugsweise Chlor oder Fluor, oder
- einen OH-Rest steht,
- k: für eine ganze Zahl von 1 bis 10, vorzugsweise für eine Zahl von 1 bis 8, besonders bevorzugt 1 bis 5, ganz besonders bevorzugt für 1, steht.

Erfindungsgemäß besonders bevorzugt werden kommerziell erhältliche Phosphazene eingesetzt. Bei diesen handelt es sich üblicherweise um Gemische von Cyclen unterschiedlicher Ringgröße.

Weiter bevorzugt sind, sowohl einzeln als auch in Mischung: Propoxyphosphazen, Phenoxyphosphazen, Methylphenoxyphosphazen, Aminophosphazen, Fluoralkylphosphazene sowie Phosphazene der folgenden Strukturen:

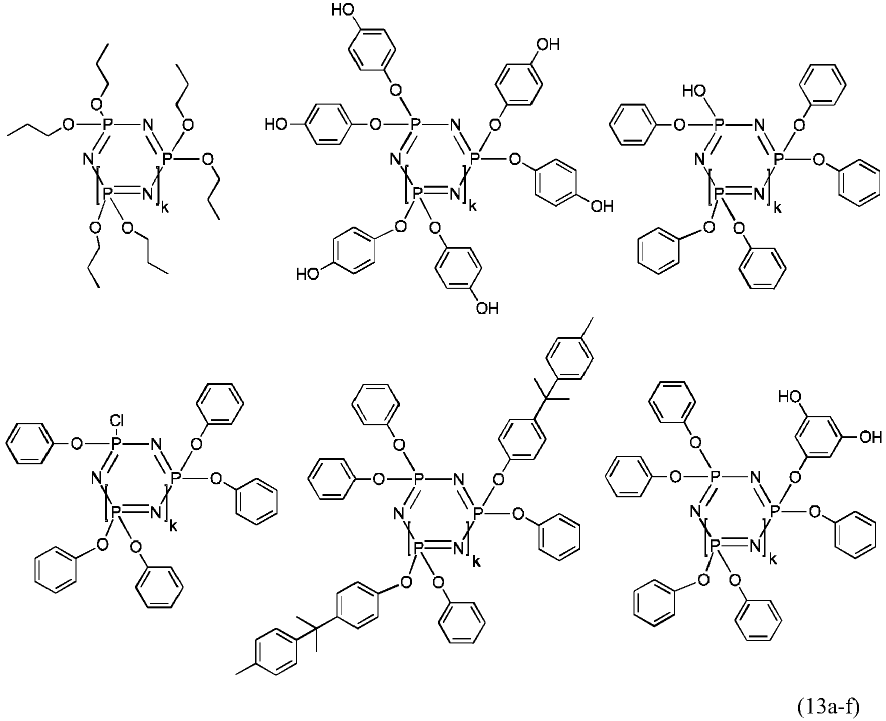

In den oben gezeigten Verbindungen 13a-f ist k = 1, 2 oder 3.

Bevorzugt ist der Anteil von am Phosphor Halogen-substituierten Phosphazenen, z. B. aus unvollständig reagiertem Ausgangsmaterial, kleiner als 1000 ppm, weiter bevorzugt kleiner als 500 ppm.

Die Phosphazene können allein oder als Mischung eingesetzt werden. Der Rest R kann immer gleich sein oder zwei oder mehr Reste in den Formeln können verschieden sein. Bevorzugt sind die Reste R eines Phosphazens identisch.

In einer Ausführungsform werden nur Phosphazene mit gleichem R eingesetzt.

Bevorzugt beträgt der Anteil der Tetramere (k = 2) von 2 bis 50 mol-%, bezogen auf die Komponente B, weiter bevorzugt von 5 bis 40 mol-%, noch weiter bevorzugt von 10 bis 30 mol-%, besonders bevorzugt von 10 bis 22 mol-%.

Bevorzugt beträgt der Anteil der höheren oligomeren Phosphazene (k = 3, 4, 5, 6 und 7) von 0 bis 30 mol-%, bezogen auf die Komponente B, weiter bevorzugt von 2,5 bis 25 mol-%, noch weiter bevorzugt von 5 bis 20 mol-%, und besonders bevorzugt von 6 - 15 mol-%.

Bevorzugt beträgt der Anteil der Oligomere mit k≥ 8 von 0 bis 2,0 mol-%, bezogen auf die Komponente B, und bevorzugt von 0,10 bis 1,00 mol-%.

Weiter bevorzugt erfüllen die Phosphazene der Komponente C alle drei zuvor genannten Bedingungen hinsichtlich der Anteile an Oligomeren.

Besonders bevorzugt ist Phenoxyphosphazen (alle R = Phenoxy, Formel 13g), alleine oder mit weiteren Phosphazenen gemäß Formel (13) als Komponente C, mit einem Anteil an Oligomeren mit k = 1 (Hexaphenoxyphosphazen) von 50 bis 98 mol-%, besonders bevorzugt 60 bis 72 Gew.-%, bezogen auf die Menge des Phenoxyphosphazens, als Komponente C enthalten. Sofern Phenoxyphosphazen eingesetzt wird, beträgt ganz besonders bevorzugt der Anteil an Oligomeren mit k = 2: 15 bis 22 Gew.-% und mit k ≥ 3: 10 bis 13 Gew.-%.

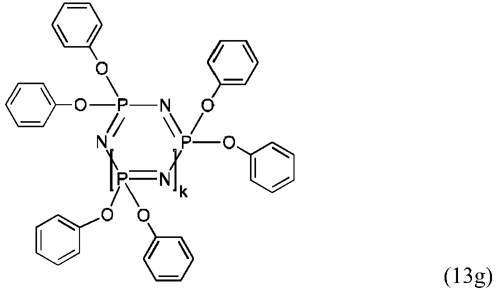

Alternativ ganz besonders bevorzugt umfasst, ganz besonders bevorzugt ist die Komponente C ein Phenoxyphosphazen mit einem Trimerenanteil (k = 1) von 70 bis 85 mol-%, einem Tetramerenanteil (k = 2) von 10 bis 20 mol-%, einem Anteil an höheren oligomeren Phosphazenen (k = 3, 4, 5, 6 und 7) von 3 bis 8 mol-% und Phosphazen-Oligomeren mit k ≥ 8 von 0,1 bis 1 mol-%, bezogen auf die Komponente C.

In einer alternativen bevorzugten Ausführungsform ist n, definiert als der arithmetische Mittelwert von k, im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen). $n = \frac{{\sum }_{i = 1}^{max} {k}_{i} ⋅ {x}_{i}}{{\sum }_{i = 1}^{max} {x}_{i}}$

Die Phosphazene und deren Herstellung sind beispielsweise in EP 728 811 A2, DE 1961668 A und WO 97/40092 A1 beschrieben.

Die Oligomer-Zusammensetzungen in den jeweiligen Blendproben lassen sich nach Compoundieren mittels ³¹P-NMR nachweisen und quantifizieren (chemische Verschiebung; δ trimer: 6,5 bis 10,0 ppm; δ tetramer: -10 bis -13,5 ppm; δ höhere Oligomere: -16,5 bis - 25,0 ppm).

Ganz besonders bevorzugt umfasst Komponente C auf Bisphenol-A basierendes Oligophosphat gemäß Formel (12) und/oder cyclisches Phosphazen gemäß Formel (13), höchst bevorzugt ist Komponente C auf Bisphenol-A basierendes Oligophosphat gemäß Formel (12) und/oder cyclisches Phosphazen gemäß Formel (13).

Der Anteil von phosphorhaltigem Flammschutzmittel in den erfindungsgemäßen Zusammensetzungen beträgt 2,5 Gew.-% bis < 8,0 Gew.-%, bevorzugt 3 Gew.-% bis 6 Gew.-%, besonders bevorzugt 4 bis 6 Gew.-%, ganz besonders bevorzugt 4,0 bis 6,0 Gew.-%, bezogen auf die Gesamtzusammensetzung.

### Komponente D

Die erfindungsgemäßen Zusammensetzungen enthalten als Komponente D ein fluorhaltiges Antitropfmittel, wobei es sich um eine Mischung mehrerer Antitropfmittel handeln kann. Die Menge an Antitropfmittel (Antidrippingmittel) insgesamt beträgt 0,2 Gew.-% bis 2,0 Gew.-%, bevorzugt 0,21 Gew.-% bis 1,6 Gew.-%, besonders bevorzugt 0,25 Gew.-% bis 1,0 Gew.-% mindestens eines Antitropfmittels.

Bevorzugt wird als Antitropfmittel fluorhaltiges Polymer, insbesondere Polyolefin, eingesetzt.

Die als Antitropfmittel bevorzugt eingesetzten fluorierten Polyolefine sind hochmolekular und besitzen Glasübergangstemperaturen von über -30°C, in der Regel von über 100°C, Fluorgehalte vorzugsweise von 65 Gew.-% bis 76 Gew.-%, insbesondere von 70 bis 76 Gew.-%. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US 3 671 487 A, 3 723 373 A und 3 838 092 A). Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. Nähere Einzelheiten sind z.B. in US 2 393 967 A beschrieben.

Je nach Einsatzform kann die Dichte der fluorierten Polyolefine zwischen 1,2 und 2,3 g/cm³, bevorzugt 2,0 g/cm³ bis 2,3 g/cm³, bestimmt nach ISO 1183-1 (2019-09), die mittlere Teilchengröße zwischen 0,05 und 1000 µm, bestimmt mittels Lichtmikroskopie oder Weißlichtinterferometrie, liegen.

Geeignete Tetrafluorethylenpolymerisat-Pulver sind handelsübliche Produkte und werden beispielsweise von der Firma DuPont unter dem Handelsnamen Teflon^{®} angeboten.

Besonders bevorzugt wird Polytetrafluorethylen (PTFE), als solches, aber auch in Form einer PTFE-haltigen Zusammensetzung als fluorhaltiges Antitropfmittel eingesetzt. Wird eine PTFE-haltige Zusammensetzung eingesetzt, so beträgt deren Mindesteinsatzmenge so viel, dass mindestens 0,2 Gew, bevorzugt mindestens 0,21 Gew.-%, besonders bevorzugt mindestens 0,25 Gew PTFE in der Gesamtzusammensetzung enthalten sind. Zu den PTFE-haltigen Zusammensetzungen zählen Hostaflon^{®} TF2021 oder aber PTFE-Blends wie Blendex^{®} B449 (ca. 50 Gew.-% PTFE und ca. 50 Gew.-% SAN [aus 80 Gew.-% Styrol und 20 Gew.-% Acrylnitril]) der Firma Chemtura. Ganz besonders bevorzugt wird als fluorhaltiges Antitropfmittel PTFE oder eine PTFE/SAN-Blend eingesetzt.

### Komponente E

Die erfindungsgemäßen Polycarbonat-Zusammensetzungen können ein oder mehrere von den Komponenten B, C und D verschiedene, weitere Additive enthalten, welche vorliegend unter "Komponente E" zusammengefasst sind.

Es sind optional (0 Gew.-%), bevorzugt bis zu 20 Gew.-%, weiter bevorzugt bis zu 10 Gew.-%, noch weiter bevorzugt 0,1 Gew.-% bis 5 Gew.-%, besonders bevorzugt 0,1 Gew.-% bis 3 Gew.-%, ganz besonders bevorzugt 0,2 Gew.-% bis 1,0 Gew.-% sonstige übliche Additive ("weitere Additive") enthalten, wobei sich diese Gewichtsprozente auf das Gesamtgewicht der Zusammensetzung beziehen. Die Gruppe der weiteren Additive umfasst kein phosphorhaltiges Flammschutzmittel gemäß Komponente C. Die Gruppe der weiteren Additive umfasst insbesondere auch kein fluorhaltiges Antitropfmittel, da dieses bereits als Komponente D beschrieben ist.

Solche weiteren Additive, wie sie üblicherweise Polycarbonaten zugesetzt werden, sind insbesondere Thermostabilisatoren, Antioxidantien, Entformungsmittel, UV-Absorber, IR-Absorber, Schlagzähmodifikatoren, Antistatika, von Komponente C verschiedene Flammschutzmittel, optische Aufheller, Füllstoffe, Lichtstreumittel, Hydrolysestabilisatoren, Umesterungsstabilisatoren, (organische) Farbstoffe, (organische/anorganische) Pigmente, Verträglichkeitsvermittler, Fließverbesserer und/oder Additive zur Lasermarkierung, insbesondere in den für Polycarbonat-basierte Zusammensetzungen üblichen Mengen. Derartige Additive sind beispielsweise in EP 0 839 623 A1, WO 96/15102 A1, EP 0 500 496 A1 oder im "Plastics Additives Handbook", Hans Zweifel, 5th Edition 2000, Hanser Verlag, München beschrieben. Diese Additive können einzeln oder auch im Gemisch zugesetzt werden und sind erfindungsgemäß bevorzugte Additive.

Weiter bevorzugt sind als weitere Additive, sofern überhaupt weitere Additive vorhanden sind, ein oder mehrere weitere Additive, ausgewählt aus der Gruppe, bestehend aus Thermostabilisatoren, Antioxidantien, Entformungsmitteln, organischen Farbstoffen, organischen Pigmenten, anorganischen Pigmenten, enthalten. Der Anteil der weiteren Additive beträgt insbesondere bevorzugt 0 bis 3 Gew.-%.

Ganz besonders bevorzugt ist als weiteres Additiv mindestens ein Thermostabilisator, ein Antioxidationsmittel und/oder ein Entformungsmittel enthalten.

Es versteht sich, dass nur solche Additive und nur in solchen Mengen zugesetzt werden dürfen, wenn sie sich nicht signifikant negativ auf den erfindungsgemäßen Effekt des hohen CTI und der guten Flammwidrigkeit auswirken und bevorzugt auch die Vicat-Temperatur, bestimmt nach ISO 306:2014-3, VST Methode B, nicht unter 110°C abgesenkt wird. Äußerst bevorzugt sind daher außer den phosphorhaltigen Flammschutzmitteln gemäß Komponente C nicht mehr als 0,05 Gew.-% weitere Flammschutzmittel enthalten.

Die erfindungsgemäßen Zusammensetzungen können neben Komponente C weitere Flammschutzmittel enthalten, sind aber frei von solchen, ausgewählt aus der Gruppe der Alkali-, Erdalkali- oder Ammoniumsalze von aliphatischen oder aromatischen Sulfonsäure-, Sulfonamid-, Sulfonimidderivaten und Kombinationen von diesen, wobei unter "Derivaten" solche Verbindungen verstanden werden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Derartige Flammschutzmittel, die in erfindungsgemäßen Zusammensetzungen nicht enthalten sind, sind insbesondere ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen, hiervon besonders bevorzugt Natrium- oder Kaliumperfluorbutansulfat, Natrium- oder Kaliumperfluoroctansulfat, Natrium- oder Kaliumdiphenylsulfonsulfonat oder deren Mischungen, insbesondere Kaliumperfluor-1-butansulfonat, welches kommerziell erhältlich ist, unter anderem als Bayowet^{®} C4 von der Firma Lanxess, Leverkusen, Deutschland.

Besonders bevorzugt enthaltene Additive sind Entformungsmittel, weiter bevorzugt auf Basis eines Fettsäureesters, noch weiter bevorzugt auf Basis eines Stearinsäureesters, insbesondere bevorzugt auf Pentaerythritbasis. Besonders bevorzugt werden Pentaerythrittetrastearat (PETS) und/oder Glycerinmonostearat (GMS) eingesetzt. Sofern ein oder mehrere Entformungsmittel eingesetzt werden, beträgt die Menge bevorzugt bis 1,0 Gew.-% (einschließlich), weiter bevorzugt 0,01 bis 0,7 Gew.-%, besonders bevorzugt 0,02 bis 0,60 Gew.-%, jeweils bezogen auf die Gesamtzusammensetzung. Außerdem beträgt die Menge an fluorhaltigem Antitropfmittel, sofern ein Entformungsmittel enthalten ist, mindestens 0,5 Gew.-%, besonders bevorzugt mindestens 0,5 Gew.-% PTFE.

Besonders bevorzugt enthaltene Additive sind auch Thermostabilisatoren. Die Menge an Thermostabilisator beträgt bevorzugt bis 0,20 Gew.-%, weiter bevorzugt 0,01 bis 0,10 Gew.-%, noch weiter bevorzugt 0,01 bis 0,05 Gew.-%, besonders bevorzugt 0,015 bis 0,040 Gew.-%, bezogen auf die Gesamtzusammensetzung.

Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos^{®} 168), Diisodecylpentaerythritoldiphosphit, Bis(2,4-di-tert-butylphenyl)pentaerythritoldiphosphit, Bis(2,4-di-cumylphenyl)pentaerythritoldiphosphit (Doverphos^{®} S-9228), Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Sie werden allein oder im Gemisch, z. B. Irganox^{®} B900 (Gemisch aus Irgafos^{®} 168 und Irganox^{®} 1076 im Verhältnis 4:1) oder Doverphos^{®} S-9228 mit Irganox^{®} B900 bzw. Irganox^{®} 1076, eingesetzt. Insbesondere bevorzugt werden Triphenylphosphin (TPP), Irgafos^{®} 168 oder Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit-3-(4-hydroxy-3,5-di-tert-butylphenyl)propionat; CAS: 6683-19-8) und Irganox 1076^{®} (Octadecyl-3-(3,5-di-tert-butyl-4-hydroxyphenyl)-propionat) eingesetzt, bevorzugt in Mengen von 0,05 - 0,5 Gew.-%.

Ferner können Sulfonsäureester oder Alkylphosphate, z. B. Mono-, Di- und/oder Trihexylphosphat, Triisoctylphosphat und/oder Trinonylphosphat, als Umesterungsinhibitoren zugegeben werden. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Beispiele für Schlagzähmodifikatoren sind: Kern-Schale-Polymerisate wie ABS oder MBS; Olefin-Acrylat-Copolymere wie z. B. Elvaloy^{®}-Typen von DuPont oder Paraloid^{®}-Typen von Dow; Siliconacrylatkautschuke wie z. B. die Metablen^{®}-Typen von Mitsubishi Rayon Co., Ltd. Die erfindungsgemäßen Zusammensetzungen haben bereits ein hervorragendes Eigenschaftsprofil ohne zusätzliche Schlagzähmodifikatoren. Erfindungsgemäße Zusammensetzungen sind daher vorzugsweise frei von Schlagzähmodifikatoren.

Besonders bevorzugt sind keine Füllstoffe in den erfindungsgemäßen Zusammensetzungen enthalten.

Erfindungsgemäß besonders bevorzugte Zusammensetzungen bestehen aus
A) >79,0 Gew.% aromatischem Polycarbonat,
B) > 2,0 Gew.-% bis 6,0 Gew.-%, insbesondere < 5,0 Gew.-%, Polyethylen,
C) 2,5 Gew.-% bis < 8,0 Gew.-% phosphorhaltigem Flammschutzmittel,
D) 0,2 Gew.-% bis 2,0 Gew.-% fluorhaltigem Antitropfmittel, wobei, wenn die Zusammensetzung > 4,0 Gew.-% Polyethylen enthält, mindestens 0,5 Gew.-% fluorhaltiges Antitropfmittel enthalten sind,
E) 0 bis 5 Gew.-% einem oder mehreren weiteren Additiv(en), ausgewählt aus der Gruppe, bestehend aus Thermostabilisatoren, Antioxidantien, Entformungsmitteln, UV-Absorbern, IR-Absorbern, Antistatika, von Komponente C verschiedenen Flammschutzmitteln, ausgenommen Alkali-, Erdalkali-, Ammoniumsalze von aliphatischen oder aromatischen Sulfonsäure-, Sulfonamid- oder Sulfonimidderivaten, optischen Aufhellern, Lichtstreumitteln, Hydrolysestabilisatoren, Umesterungsstabilisatoren, organischen Farbstoffen, organischen Pigmenten, anorganischen Pigmenten, Verträglichkeitsvermittlern, Fließverbesserern, Additiven zur Lasermarkierung und deren Mischungen.

Erfindungsgemäß ganz besonders bevorzugte Zusammensetzungen bestehen aus
A) 83 Gew.-% bis 93,8 Gew.-% aromatischem Polycarbonat,
B) 3 Gew.-% bis 4 Gew.-% Polyethylen,
C) 3 Gew.-% bis 6 Gew.-% phosphorhaltigem Flammschutzmittel,
D) 0,2 Gew.-% bis 2,0 Gew.-% fluorhaltigem Antitropfmittel, wobei, wenn die Zusammensetzung > 4,0 Gew.-% Polyethylen enthält, mindestens 0,5 Gew.-% fluorhaltiges Antitropfmittel enthalten sind,
E) 0 bis 5 Gew.-% einem oder mehreren weiteren Additiv(en), ausgewählt aus der Gruppe, bestehend aus Thermostabilisatoren, Antioxidantien, Entformungsmitteln, UV-Absorbern, IR-Absorbern, Antistatika, von Komponente C verschiedenen Flammschutzmitteln, ausgenommen Alkali-, Erdalkali-, Ammoniumsalze von aliphatischen oder aromatischen Sulfonsäure-, Sulfonamid- oder Sulfonimidderivaten, optischen Aufhellern, Lichtstreumitteln, Hydrolysestabilisatoren, Umesterungsstabilisatoren, organischen Farbstoffen, organischen Pigmenten, anorganischen Pigmenten, Verträglichkeitsvermittlern, Fließverbesserern, Additiven zur Lasermarkierung und deren Mischungen.

Dabei ist vorzugsweise als phosphorhaltiges Flammschutzmittel entweder ein Organophosphat, insbesondere eines der Formel (12), 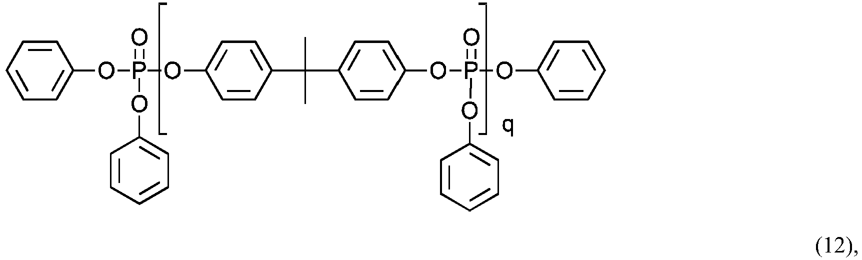
wobei q = 1 bis 20, insbesondere 1,0 bis 1,2 ist, oder ein
Phosphazen der Formel (13g) 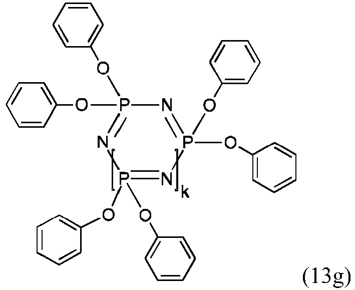
mit k = 1, 2 oder 3, einschließlich Mischungen hiervon, enthalten. Es versteht sich, dass es sich hierbei bevorzugt um einem Mischung von verschiedenen Oligomeren dieser Formel handelt, da kommerziell üblicherweise Mischungen verfügbar sind. Ganz besonders bevorzugt ist das phosphorhaltige Flammschutzmittel eines der Formel (12) oder (13g), wie oben definiert.

Bei den als bevorzugt, weiter bevorzugt, besonders bevorzugt etc. beschriebenen Zusammensetzungen beträgt das Molekulargewicht des eingesetzten Polyethylens bevorzugt mindestens 200.000 g/mol, bestimmt mittels Hochtemperatur-GPC in 1,2,4-Trichlorbenzol.

Die Herstellung der erfindungsgemäßen Polymer-Zusammensetzungen, enthaltend die vermischten Komponenten A, B, C, D und ggf. E sowie ggf. weitere Bestandteile, kann unter Verwendung von Pulvervormischungen erfolgen. Es können auch Vormischungen aus Granulaten oder Granulaten und Pulvern mit den erfindungsgemäßen Zusätzen verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können die als Komponente E bezeichneten Additive und auch weitere Bestandteile der erfindungsgemäßen Zusammensetzungen durch bekannte Verfahren oder als Masterbatch eingebracht werden. Die Verwendung von Masterbatchen ist insbesondere zum Einbringen von Additiven und weiteren Bestandteilen bevorzugt, wobei insbesondere Masterbatche auf Basis der jeweiligen Polymermatrix verwendet werden.

Die erfindungsgemäßen Zusammensetzungen können beispielsweise extrudiert werden. Nach der Extrusion kann das Extrudat abgekühlt und zerkleinert werden. Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Erfindungsgemäße Zusammensetzungen werden bevorzugt zur Herstellung von Formteilen für Bauteile aus dem EE-Bereich verwendet, insbesondere für Hochspannungsschalter, Wechselrichter, Relais, elektronische Verbinder, elektrische Verbinder, Schutzschalter, Bauteile für Photovoltaikanwendungen, elektrische Motoren, Kühlkörper, Ladegeräte oder Ladestecker für elektrische Fahrzeuge, Elektroanschlusskästen, Smart Meter Gehäuse, Miniaturtrennschalter; Strom Sammelschienen (bus bars).

Gegenstand der Erfindung sind somit Formteile, bestehend aus oder umfassend Bereiche aus erfindungsgemäßen Zusammensetzungen, als auch entsprechende Bauteile oder Teile von Bauteilen, umfassend Elemente, also Formteile, welche aus erfindungsgemäßen Zusammensetzungen bestehen oder Bereiche, bestehend aus erfindungsgemäßen Zusammensetzungen, umfassen.

Bevorzugt ist das Bauteil auf eine Betriebsspannung von mindestens 400 V ausgelegt. Es kann aber ebenso auf eine haushaltsübliche Betriebsspannung von in Europa 230 V ± 23 V ausgelegt sein. Allerdings können nun niedrigere Abstände zwischen den elektrischen Leitern realisiert werden.

Die hohe Kriechstromfestigkeit der erfindungsgemäßen Polycarbonat-Zusammensetzungen ermöglicht es, unter Verwendung von dem Polycarbonat-Material zwischen zwei elektrischen Leitern eines Bauteils geringere Abstände zu realisieren, als es bisher bei Einsatz von Polycarbonat möglich gewesen ist.

Gegenstand der Erfindung ist somit auch ein EE-Bauteil, umfassend einen ersten elektrischen Leiter und einen zweiten elektrischen Leiter in einem ersten Abstand d1 und einem zweiten Abstand d2 zueinander,
welche über ein Element aus einer erfindungsgemäßen thermoplastischen Zusammensetzung, die in direktem Kontakt mit dem ersten elektrischen Leiter und dem zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des Elements aus der thermoplastischen Zusammensetzung ist und
wobei der Abstand d2 die kürzeste Strecke zwischen dem ersten elektrischen Leiter und dem zweiten elektrischen Leiter durch die Luft ist,
wobei d2 so ausgewählt ist, dass bei der jeweiligen Betriebsspannung ein Überschlag durch die Luft verhindert wird und
wobei d1 bei der nachfolgend aufgelisteten Betriebsspannung U beträgt:
   d1i(0V ≤ U ≤ 250V): 1,8 mm bis < 2,5 mm
   dlii(250 V < U ≤ 500 V) = 3,6 mm bis < 5,0 mm
   d1iii(500 V < U ≤ 1000 V) = 7,1 mm bis < 10,0 mm.

Derartig geringe Abstände sind nur mit einem Material, das mindestens einen CTI von 400 V aufweist, realisierbar.

"Element aus einer erfindungsgemäßen thermoplastischen Zusammensetzung" bedeutet hierbei, dass ein Element vorliegt, welches aus einer erfindungsgemäßen thermoplastischen Zusammensetzung besteht, die Zusammensetzung also nicht mit zusätzlichen Komponenten vermischt wurde.

Sofern das Material einen CTI von 600 V aufweist, sind noch geringere Abstände realisierbar, so dass d1 dann bei der aufgelisteten Betriebsspannung vorzugsweise beträgt:
d1i(0V ≤ U ≤ 250V): 1,3 mm bis < 2,5 mm,
dlii(250 V < U ≤ 500 V) = 2,5 mm bis < 5,0 mm,
dliii(500 V < U ≤ 1000 V) = 5,0 mm bis < 10,0 mm.

Besonders bevorzugt beträgt d1 bei Verwendung eines Materials mit einem CTI von 600V bei der aufgelisteten Betriebsspannung:
dli(0V ≤ U ≤ 250V): 1,3 mm bis < 1,8 mm,
dlii(250 V < U ≤ 500 V) = 2,5 mm bis < 3,6 mm,
d1iii(500 V < U ≤ 1000 V) = 5,0 mm bis < 7,1 mm, Abstände, die auch mit einem Material mit einem CTI von 400 oder 450 V nicht realisierbar sind, sondern einen CTI von 600 V erfordern.

Bekanntlich hat der Verschmutzungsgrad Auswirkungen auf die elektrische Leitfähigkeit. Die genannten Abstände d1 und d2 sind in der Praxis nutzbar bei Bauteilen, bei denen, z.B. aufgrund baulicher Abschirmung, eine Schutzart IP6K9K nach ISO 20653:2013-02 eingehalten werden kann.

Erfindungsgemäß bevorzugte thermoplastische Zusammensetzungen gehören zur Isolierstoffgruppe II (400 V ≤ CTI < 600 V), ganz besonders bevorzugte Zusammensetzungen gehören zur Isolierstoffgruppe I (600 V ≤ CTI), eingestuft nach DIN EN 60664-1.

### Beispiele

### 1. Beschreibung der Rohstoffe und Prüfmethoden

### a) Rohstoffe

**Komponente A-1:** Lineares Polycarbonat auf Basis von Bisphenol A mit einer Schmelzevolumenfließrate von 12 cm³/(10 min) (gemäß ISO 1133:2012-03, bei einer Prüftemperatur 300°C und 1,2 kg Belastung), enthaltend als Komponente E-3 250 ppm ( = 0,025 Gew.-%, bezogen auf das Gesamtgewicht von Komponente A) Thermostabilisator Triphenylphosphin.

**Komponente A-2:** Lineares Polycarbonat auf Basis von Bisphenol A mit einer Schmelzevolumenfließrate von 6 cm³/(10 min) (gemäß ISO 1133:2012-03, bei einer Prüftemperatur 300°C und 1,2 kg Belastung).

**Komponente B-1:** Ultrahochmolekulares Polyethylen (UHMWPE) UMFI 30X der Firma Shamrock Technologies mit einem mittleren Partikeldurchmesser (D₅₀) von 30 µm, bestimmt mittels Laserbeugung nach ISO 13320:2009.

**Komponente B-2:** High density Polyethylene Formolene LH5320 von Formosa Plastics mit einer Dichte von 0.953 g/cm³, bestimmt nach ASTM D1505-18 und einer Schmelzevolumenfließrate von 20 g/10 min, gemessen nach ASTM D1238-20.

**Komponente C-1:** Organophosphat der Formel (12) mit q = 1,0 - 1,2. Bisphenol-A-bis(diphenylphosphat) von Adeka.

**Komponente C-2:** Phenoxycyclophosphazen Rabitle FP110 von Fushimi Pharmaceutical, Japan, Formel (13g), mit einem Trimerenanteil (k = 1) von etwa 68 mol-%.

**Komponente Cx:** Kaliumperfluor-1-butansulfonat, kommerziell erhältlich als Bayowet^{®} C4 der Firma Lanxess AG, Leverkusen, Deutschland, CAS-Nr. 29420-49-3.

**Komponente D-1:** In SAN-gekapseltes Polytetrafluoethylen ADS5000 (ca. 50 Gew.-% PTFE (fluorhaltiges Antitropfmittel) und ca. 50 Gew.-% SAN) der Firma Chemical Innovation Co., Ltd. Thailand.

**Komponente D-2:** Fluorhaltiges Antitropfmittel. Polytetrafluorethylen Teflon CFP6000X der Firma Chemours Netherlands B.V.

**Komponente E-1:** Entformungsmittel. Pentaerythritoltetrastearat, kommerziell verfügbar als Loxiol VPG 861 von der Firma Emery Oleochemicals Group.

**Komponente E-2:** Antioxidationsmittel. Irganox^{®} B900 der BASF (Gemisch aus Irgafos^{®} 168 (Tris-(2,4-di-tert-butylphenyl)phosphit) und Irganox^{®} 1076 (Octadecyl-3-(3,5-di-tert-butyl-4-hydroxyphenyl)-propionat) im Gew.-Verhältnis 4:1).

### b) Prüfmethoden

### Kriechstromfestigkeit ("comparative tracking index", CTI):

Zur Ermittlung der Kriechstromfestigkeit wurden die hier beschriebenen Zusammensetzungen nach der Schnellprüfmethode in Anlehnung an die IEC 60112:2009 geprüft. Hierzu wurde eine 0,1%-ige Ammoniumchlorid Prüflösung (395 Ohm*cm Widerstand) tropfenweise zwischen zwei mit einem Abstand von 4 mm benachbarten Elektroden auf die Oberfläche von Prüfkörpern der Maße 60 mm x 40 mm x 4 mm im zeitlichen Abstand von 30s appliziert. Zwischen den Elektroden lag eine Prüfspannung an, die im Verlauf des Tests variiert wurde. Der erste Prüfkörper wurde bei einer Startspannung von 300 V bzw. 350 V getestet. Es wurden insgesamt maximal 50 Tropfen (ein Tropfen alle 30s) pro Spannung appliziert, so lange kein Kriechstrom > 0,5A über 2s auftrat oder die Probe gebrannt hat. Nach 50 Tropfen wurde die Spannung um 50 V erhöht und ein neuer Prüfkörper bei dieser höheren Spannung, gemäß dem zuvor beschriebenen Vorgehen, getestet. Dieser Prozess wurde so lange fortgesetzt, bis entweder 600 V erreicht waren oder ein Kriechstrom bzw. Brand auftrat. Sollte es bereits bei weniger als 50 Tropfen zu einem der zuvor genannten Effekte gekommen sein, wurde die Spannung um 25 V reduziert und ein neuer Prüfkörper bei dieser niedrigeren Spannung getestet. Die Spannung wurde so lange reduziert, bis der Test mit 50 Tropfen ohne Kriechstrom oder Brand bestanden wurde. Mit diesem Prozedere wurde also die maximal mögliche Spannung ermittelt, bei der eine Zusammensetzung 50 Tropfen der Prüflösung ohne Auftreten eines Kriechstroms widerstehen konnte. Abschließend wurden bei der ermittelten Maximalspannung zur Bestätigung vier weitere Prüfkörper mit jeweils 50 Tropfen getestet. Dieser bestätigte Wert wird in den Beispielen als CTI angegeben. Ein 100 Tropfen-Wert wurde nicht ermittelt, daher "Schnellprüfmethode in Anlehnung" an genannte Norm.

### Flammwidrigkeit:

Die Prüfung der Flammwidrigkeit der Polycarbonat-Zusammensetzungen wurde gemäß Underwriter Laboratory Methode UL 94 V in Dicken von 1,5 mm - 3 mm durchgeführt. Die getesteten Prüfstäbe wurden zuvor für 7 Tage bei 50% relativer Luftfeuchte und 70°C Umgebungstemperatur konditioniert.

Unterschiedliche Brandklassen werden je nach Verhalten der Prüfkörper vergeben. Dazu zählen die Zeit bis zum Erlöschen der Flamme, Resistenz zum Abtropfen bzw. ob ein Material brennend abtropft. Die hiernach bestimmten Klassen werden mit V0, V1 und V2 bezeichnet und auf Basis von insgesamt fünf getesteten Prüfkörpern ermittelt.

**V0:** Der Prüfkörper, der mit seiner Längsachse 180° (vertikal) zur Flamme positioniert wird, hat eine durchschnittliche Nachbrennzeit nach Entfernen der Flamme von nicht mehr als 10s und produziert keine abtropfenden Plastikpartikel, die eine unter dem Prüfkörper befindliche Watte entzünden. Die Gesamtnachbrennzeit von fünf Prüfkörpern, jeweils zweimal beflammt, liegt bei maximal 50s.

**V1:** Im Unterschied zu V0 liegt hier die durchschnittliche maximale Nachbrennzeit bei < 30s, wobei auch hier keine Partikel abtropfen und die Watte entzünden dürfen. Die Gesamtnachbrennzeit von fünf Prüfkörpern, jeweils zweimal beflammt, liegt bei < 250s. **V2:** Im Unterschied zu V0 und V1 entstehen bei dieser Klassifizierung abtropfende Plastikpartikel, die die Watte entzünden. Die Einzelnachbrennzeiten liegen bei < 30s und die Gesamtnachbrennzeit von 5 Prüfkörpern, jeweils zweimal beflammt, bei < 250s.

**n.b.:** Der Test liefert keine Flammschutz-Klassifizierung, wenn die Nachbrennzeiten überschritten werden.

### Wärmeformbeständigkeit:

Die Wärmeformbeständigkeit der Zusammensetzungen wurde anhand der Vicat-Erweichungstemperatur (Methode B, Prüfkraft 50N, Aufheizrate 50 K/h) an Prüfkörpern mit den Dimensionen 80 mm x 10 mm x 4 mm gemäß der ISO 306:2014-3 ermittelt.

### 2. Herstellung der Probenkörper

Die Zusammensetzungen wurden auf einem 25 mm Doppelwellenextruder der Firma Coperion mit einem Durchsatz von 20 kg/h hergestellt. Die Temperaturen der Polymerschmelze im Extruder betrugen zwischen 260-280°C bei einer mittleren Schneckendrehzahl von 225 U/min.

Die Prüfkörper mit den Abmessungen 60 mm x 40 mm x 4 mm wurden aus den Formmassen mittels Standard-Spritzgussverfahren bei einer Massetemperatur von 280°C und einer Werkzeugtemperatur von 80°C hergestellt.

### 3. Ergebnisse

In den nachfolgenden Tabellen bedeutet "n.g": "nicht getestet" und "n.b.": "nicht bestanden". Der Hinweis "*" bedeutet: "entnommen aus UL Yellow Card".

**Tabelle 1: UHMWPE ohne Flammschutzmittel**

| **Komponente** | | **V-1** | **V-2** | **V-3** | **V-4** | **V-5** | **V-6** |
|---|---|---|---|---|---|---|---|
| **A-1** | Gew.-% | 100 | 94 | 93 | 92 | 91 | 90 |
| **A-2** | Gew-% | | 5 | 5 | 5 | 5 | 5 |
| **B-1** | Gew.-% | 0 | 1,0 | 2,0 | 3,0 | 4,0 | 5,0 |
| **CTI** | V | 250 | 200 | 200 | 600 | 600 | 300 |
| **UL94** | 1,5 mm, 7d | V2* | n.g. | n.g. | n.g. | n.g. | n.g. |
| | 2 mm, 7d | V2* | n.g. | n.g. | n.g. | n.g. | n.g. |
| | 3 mm, 7d | n.g. | n.g. | n.g. | n.g. | n.g. | n.g. |
| **Vicat-Temperatur** | °C | 144 | 144 | 144 | 144 | 144 | 143 |

| | | | | | | | |
|---|---|---|---|---|---|---|---|
| Anmerkung: V-9 mit BDP erreicht nur UL94-V2, d.h. bei V-1 bis V-6 sind keine besseren Werte zu erwarten | | | | | | | |

Tabelle 1 zeigt Zusammensetzungen, bestehend aus Polycarbonat und unterschiedlichen Gehalten an Ultrahochmolekularem Polyethylen (UMWPE). Aus den Ergebnissen der CTI-Prüfungen geht hervor, dass die Kriechstromfestigkeit von Polycarbonat durch Zugabe von 3 sowie 4 Gew.-% UHMWPE (Beispiele V-4, V-5) auf 600 V deutlich verbessert werden kann. 2,0 Gew.-% oder weniger PE hat einen eher negativen, allenfalls keinen, Einfluss auf den CTI-Wert (V-1, V-2, V-3). Es fällt auf, dass auch größere Mengen PE wiederum zu einem schlechteren CTI-Wert führen, was deutlich zeigt, dass es einen gewissen Vorzugsbereich bei PC/PE-Zusammensetzungen gibt, bei dem der PE-Gehalt nicht zu niedrig, aber auch nicht zu hoch sein darf, um einen CTI von 600 V zu erzielen. Hierbei sind jedoch auch die nachfolgenden Ergebnisse zu beachten, da das Phosphor-haltige Flammschutzmittel auch einen Einfluss hat. In einem recht engen Bereich hat die Zugabe von PE keinen negativen Einfluss auf die Vicat-Erweichungstemperatur des Polycarbonates.

**Tabelle 2: UHMWPE mit Flammschutzmittel**

| **Komponente** | | **E-7** | **E-8** | **V-9** | **V-10** | **E-11** | **E-12** | **E-13** | **V-14** | **V-15** |
|---|---|---|---|---|---|---|---|---|---|---|
| **A-1** | Gew.-% | 86,4 | 86,9 | 86,4 | 85,9 | 86,5 | 85,4 | 85,9 | 87,4 | 87,9 |
| **A-2** | Gew-% | 5 | 5 | 5 | 5 | 5 | 5 | 5 | 5 | 5 |
| **E-1** | Gew.-% | 0,5 | 0,5 | 0,5 | 0,5 | | 0,5 | 0,5 | 0,5 | 0,5 |
| **E-2** | Gew.-% | 0,1 | 0,1 | 0,1 | 0,1 | | 0,1 | 0,1 | 0,1 | 0,1 |
| **B-1** | Gew.-% | 3,0 | 3,0 | 4,0 | 4,0 | 4,0 | 4,0 | 4,0 | 6,0 | 6,0 |
| **C-1** | Gew.-% | 4,0 | 4,0 | 4,0 | 4,0 | 4,0 | 4,0 | 4,0 | | |
| **D-1** | Gew.-% | 1,0 | | | 0,5 | 0,5 | 1,0 | | 1,0 | |
| **D-2** | Gew.-% | | 0,5 | | | | | 0,5 | | 0,5 |
| **CTI** | V | 600 | 600 | 600 | 600 | 600 | 600 | 600 | 600 | 600 |
| **UL94** | 1,5 mm, 7d | V0 | V1 | V2 | V2 | n.b. | V1 | V1 | n.b. | n.b. |
| | 2 mm, 7d | V0 | V0 | V2 | V2 | V0 | V0 | V0 | n.b. | n.b. |
| | 3 mm, 7d | V0 | V0 | n.b. | n.b. | V0 | V0 | V0 | n.b. | n.b. |
| **Vicat-Temperatur** | °C | 128 | 128 | 127 | 128 | 130 | 127 | 128 | 142 | 141 |

Tabelle 2 zeigt Zusammensetzungen von Polycarbonat mit UHMWPE in Kombination mit BDP und PTFE. Die Ergebnisse der einzelnen Zusammensetzungen zeigen den Einfluss von Flammschutz- und Antitropfmittel sowohl auf die Kriechstromfestigkeit als auch auf das Brandverhalten. Überraschenderweise führt die Zugabe von BDP zu PC/PE-Gemischen nicht per se zu einer Absenkung des CTI. In jedem Fall ist aber eine Kombination mit PTFE oder PTFE/SAN nötig, um die gewünschte V0-Flammklassifizierung nach UL94 zu erreichen (siehe V-9). Betrachtet man die Ergebnisse V-10 und E-13 im Vergleich, so fällt auf, dass das Brandverhalten durch die Zugabe von Entformungsmittel etwas verschlechtert wird und 0,5 Gew-% PTFE/SAN (50:50 Mischung), also 0,25 Gew.-% PTFE, als Antitropfmittel nicht ausreichend ist. In Kontrast hierzu steht E-13, bei dessen Zusammensetzung alternativ reines PTFE-Pulver zugegeben wurde, was zu einer deutlichen Verbesserung des Brandverhaltens führt. Gleiches gilt für E-12, welches rechnerisch ebenfalls 0,5 Gew.-% PTFE enthält (in einem 50:50 Masterbatch mit SAN). Es kann also geschlussfolgert werden, dass eine gewisse Mindestkonzentration (hier 0,5 Gew-%) von reinem PTFE nötig ist.

**Tabelle 3: Konzentrationsbereiche BDP sowie weiteres PE**

| **Komponente** | | **E-16** | **E-17** | **E-18** | **V-19** | **V-20** | **E-21** |
|---|---|---|---|---|---|---|---|
| **A-1** | Gew.-% | 83,9 | 83,9 | 83,4 | 82,4 | 78,4 | 85,9 |
| **A-2** | Gew-% | 5 | 5 | 5 | 5 | 5 | 5 |
| **E-1** | Gew.-% | 0,5 | 0,5 | 0,5 | 0,5 | 0,5 | 0,5 |
| **B-1** | Gew.-% | 4,0 | 4,0 | 4,0 | 4,0 | 4,0 | |
| **B-2** | Gew.-% | | | | | | 4,0 |
| **C-1** | Gew.-% | 6,0 | 6,0 | 6,0 | 8,0 | 12,0 | 4,0 |
| **D-1** | Gew.-% | 0,5 | | 1,0 | | | |
| **D-2** | Gew.-% | | 0,5 | | | | 0,5 |
| **CTI** | V | 600 | 600 | 600 | 300 | 275 | 600 |
| **UL94** | 1,5 mm, 7d | V1 | V1 | V1 | V2 | V2 | V0 |
| | 2 mm, 7d | V1 | V0 | V0 | V2 | V2 | V0 |
| | 3 mm, 7d | V0 | V0 | V0 | n.b. | V2 | V0 |
| **Vicat-Temperatur** | °C | 119 | 119 | 119 | 115 | 105 | 127 |

| | | | | | | | |
|---|---|---|---|---|---|---|---|
| n.b.: "nicht bestanden" | | | | | | | |

Tabelle 3 zeigt den Einfluss auf CTI und Flammschutz bei Zugabe von unterschiedlichen Konzentrationen an BDP. Konzentrationen ≥ 8 Gew-% BDP (hierzu auch Tabelle 2) wirken sich deutlich negativ auf den CTI aus und können ohne Antitropfmittel nicht die UL 94 V0-Klassifizierung erzielen (siehe V-19, V-20). Die Kombination aus 6 Gew.-% BDP und 0,25 Gew-% PTFE (im Masterbatch, E-16) liefern den gewünschten hohen CTI sowie eine V0-Klassifizierung. Um auch in dünneren Wandstärken eine ausreichende V0-Klassifizierung zu gewährleisten, sind höhere PTFE-Konzentrationen von ≥ 0,5 Gew-% PTFE (E-17), auch in Form des Masterbatches D-1, in Kombination mit 6 Gew-% BDP (E18) einzusetzen. Gleichermaßen gut wie mit UHMWPE lassen sich grundsätzlich aber auch mit HDPE, in Kombination mit BDP und PTFE, Materialien mit einem CTI von 600V und einer V0-Klassifizierung bei 2 mm erhalten (siehe E-21).

**Tabelle 4: UHMWPE/PE mit Phosphazen**

| **Komponente** | | **V-22** | **E-23** | **E-24** | **V-25** | **V-26** | **E-27** |
|---|---|---|---|---|---|---|---|
| **A-1** | Gew.-% | 86,4 | 85,4 | 85,9 | 77,4 | 73,4 | 85,9 |
| **A-2** | Gew-% | 5 | 5 | 5 | 10 | 10 | 5 |
| **E-1** | Gew.-% | 0,5 | 0,5 | 0,5 | 0,5 | 0,5 | 0,5 |
| **E-2** | Gew.-% | 0,1 | 0,1 | 0,1 | 0,1 | 0,1 | 0,1 |
| **B-1** | Gew.-% | 4,0 | 4,0 | 4,0 | 4,0 | 4,0 | |
| **B-2** | Gew.-% | | | | | | 4,0 |
| **C-2** | Gew.-% | 4,0 | 4,0 | 4,0 | 8,0 | 12,0 | 4,0 |
| **D-1** | Gew.-% | | 1,0 | | | | |
| **D-2** | Gew.-% | | | 0,5 | | | 0,5 |
| **CTI** | V | 300 | 600 | 600 | 275 | 225 | 600 |
| **UL94** | 1,5 mm, 7d | V2 | V1 | V1 | V2 | V2 | V0 |
| | 2 mm, 7d | V2 | V0 | V0 | V2 | V2 | V0 |
| | 3 mm, 7d | n.b. | V0 | V0 | V2 | V2 | V0 |
| **Vicat-Temperatur** | °C | 131 | 131 | 132 | 122 | 111 | 132 |

Tabelle 4 zeigt den Einfluss auf CTI und Flammschutz bei Zugabe von unterschiedlichen Konzentrationen an Phosphazen. Vergleichbar zu den Zusammensetzungen mit BDP weisen auch Mischungen mit höheren Konzentrationen an Phosphazen einen deutlich niedrigeren CTI auf. Die Werte liegen sogar noch unterhalb derer von BDP-additivierten Zusammensetzungen (siehe V-25, V-26). Es fällt auf, dass bei Verwendung von Phosphazen, im Gegensatz zu BDP, eine Mischung ohne PTFE in keinem Fall einen CTI von 600 V liefert (siehe V-22). Eine Mindestmenge von 0,5 Gew-% reinem PTFE ist hier nötig, um sowohl den CTI als auch die Flammwidrigkeit (V0) zu erzielen (siehe E-24), wobei das 50:50-Gemisch mit SAN hier genauso gut performt (E-23). Wie bereits oben gezeigt, lassen sich gleichermaßen gute Merkmale mit HDPE anstelle von UHMWPE erreichen (E-27).

**Tabelle 5: UHMWPE mit C4-Salz**

| **Komponente** | | **V-28** | **V-29** | **V-30** |
|---|---|---|---|---|
| **A-1** | Gew.-% | 90,35 | 90,31 | 85,9 |
| **A-2** | Gew-% | 5 | 5 | 5 |
| **E-1** | Gew.-% | 0,5 | 0,5 | 0,5 |
| **E-2** | Gew.-% | 0,1 | 0,1 | 0,1 |
| **B-1** | Gew.-% | 4,0 | 4,0 | 4,0 |
| **Cx** | Gew.-% | 0,05 | 0,09 | 0,05 |
| **C-1** | Gew.-% | | | 4,0 |
| **D-1** | Gew.-% | | | 0,5 |
| **CTI** | V | 600 | 225 | 200 |
| **UL94** | 1,5 mm, 7d | n.b. | n.b. | n.b. |
| | 2 mm, 7d | n.b. | n.b. | V0 |
| | 3 mm, 7d | V2 | V2 | V0 |
| **Vicat-Temperatur** | °C | 141 | 141 | 128 |

Die Ergebnisse in Tabelle 5 zeigen, dass sich der Einsatz von Metallsulfonaten (C4-Salz, Cx) als Flammschutzmittel deutlich stärker auf die Kriechstromfestigkeit auswirkt, als der Zusatz von BDP. Während kleinste Konzentrationen keinen negativen Einfluss auf den CTI haben (Beispiel V-28), bedeuten bereits Konzentrationen von 0,09 Gew.-% einen Rückgang des CTI auf 225 V (V-29), unterhalb der Kriechstromfestigkeit von reinem Bisphenol A-basierten Polycarbonat. Zwar kann die UL 94 V0-Klassifizierung bei 2 mm durch Zusatz von BDP erreicht werden, der CTI-Wert bleibt aber auf einem niedrigen Niveau (V-30).

## Patentansprüche

1. Thermoplastische Zusammensetzung, enthaltend
A) mindestens 70 Gew.% aromatisches Polycarbonat,
B) > 2,0 Gew.-% bis 6,0 Gew.-% Polyethylen,
C) 2,5 Gew.-% bis < 8,0 Gew.-% phosphorhaltiges Flammschutzmittel,
D) 0,2 Gew.-% bis 2,0 Gew.-% fluorhaltiges Antitropfmittel,
wobei die Zusammensetzung frei von Flammschutzmitteln, ausgewählt aus der Gruppe der Alkali-, Erdalkali-, Ammoniumsalze von aliphatischen oder aromatischen Sulfonsäure-, Sulfonamid- oder Sulfonimidderivaten, ist
und wobei, wenn die Zusammensetzung > 4,0 Gew.-% Polyethylen enthält, mindestens 0,5 Gew.-% fluorhaltiges Antitropfmittel enthalten sind,
und wobei sich die Gew.-%-Angaben auf die Gesamtzusammensetzung beziehen.

2. Thermoplastische Zusammensetzung nach Anspruch 1, wobei das Polyethylen ein HDPE, ein HMWPE, ein UHMWPE oder eine Mischung aus diesen ist.

3. Thermoplastische Zusammensetzung nach Anspruch 1 oder 2, wobei das phosphorhaltige Flammschutzmittel ein Organophosphat, ein Phosphazen oder eine Mischung aus diesen ist.

4. Thermoplastische Zusammensetzung nach einem der vorhergehenden Ansprüche, wobei als phosphorhaltiges Flammschutzmittel ein Organophosphat der Formel (11) enthalten ist 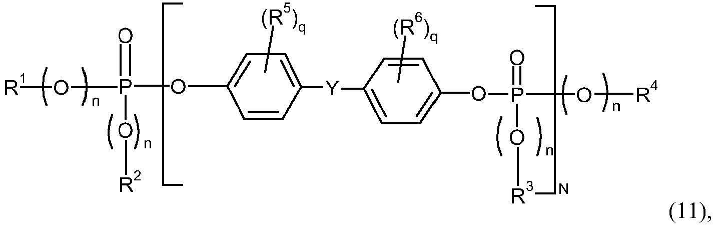 worin
R¹, R², R³ und R⁴ jeweils unabhängig voneinander einen linearen oder verzweigten C₁- bis C₈-Alkylrest und/oder gegebenenfalls durch lineares oder verzweigtes Alkylsubstituierten C₅- bis C₆-Cycloalkylrest, C₆- bis C₁₀-Arylrest oder C₇- bis C₁₂-Aralkylrest,
n unabhängig voneinander 0 oder 1,
q unabhängig voneinander 0, 1, 2, 3 oder 4,
N eine Zahl zwischen 1 und 30,
R₅ und R₆ unabhängig voneinander lineares oder verzweigtes C₁- bis C₄-Alkylrest, vorzugsweise Methylrest, und
Y lineares oder verzweigtes C₁- bis C₇-Alkyliden, einen linearen oder verzweigten C₁- bis C₇-Alkylenrest, C₅- bis C₁₂-Cycloalkylenrest, C₅- bis C₁₂-Cycloalkylidenrest, -O-, -S-, -SO-, SO₂ oder -CO- bedeuten.

5. Thermoplastische Zusammensetzung nach einem der vorhergehenden Ansprüche, wobei als phosphorhaltiges Flammschutzmittel Phosphazen der Formel (13g) enthalten ist 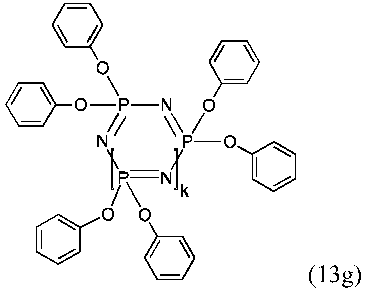 mit k = 1, 2 oder 3, einschließlich Mischungen hiervon.

6. Thermoplastische Zusammensetzung nach einem der vorhergehenden Ansprüche, enthaltend 3 bis 6 Gew.-% phosphorhaltiges Flammschutzmittel.

7. Thermoplastische Zusammensetzung nach einem der vorhergehenden Ansprüche, wobei als weiteres Additiv Entformungsmittel enthalten ist, als fluorhaltiges Antitropfmittel PTFE enthalten ist und die Menge an PTFE mindestens 0,5 Gew.-% beträgt.

8. Thermoplastische Zusammensetzung nach einem der vorgehenden Ansprüche, enthaltend 3 bis 4 Gew.-% Polyethylen.

9. Thermoplastische Zusammensetzung nach einem der vorhergehenden Ansprüche, enthaltend bis 1,0 Gew.-% fluorhaltiges Antitropfmittel.

10. Thermoplastische Zusammensetzung nach einem der vorhergehenden Ansprüche, bestehend aus
A) mindestens 70 Gew.% aromatischem Polycarbonat,
B) > 2,0 Gew.-% bis 6,0 Gew.-% Polyethylen,
C) 2,5 Gew.-% bis < 8,0 Gew.-% phosphorhaltigem Flammschutzmittel,
D) 0,2 Gew.-% bis 2,0 Gew.-% fluorhaltigem Antitropfmittel, wobei, wenn die Zusammensetzung > 4,0 Gew.-% Polyethylen enthält, mindestens 0,5 Gew.-% fluorhaltiges Antitropfmittel enthalten sind,
E) 0 bis 5 Gew.-% einem oder mehreren weiteren Additiv(en), ausgewählt aus der Gruppe, bestehend aus Thermostabilisatoren, Antioxidantien, Entformungsmitteln, UV-Absorbern, IR-Absorbern, Antistatika, von Komponente C verschiedenen Flammschutzmitteln, ausgenommen Alkali-, Erdalkali-, Ammoniumsalze von aliphatischen oder aromatischen Sulfonsäure-, Sulfonamid- oder Sulfonimidderivaten, optischen Aufhellern, Lichtstreumitteln, Hydrolysestabilisatoren, Umesterungsstabilisatoren, organischen Farbstoffen, organischen Pigmenten, anorganischen Pigmenten, Verträglichkeitsvermittlern, Fließverbesserern, Additiven zur Lasermarkierung und deren Mischungen.

11. Formteil bestehend aus oder umfassend einen Bereich aus einer thermoplastischen Zusammensetzung nach einem der vorhergehenden Ansprüche.

12. Formteil nach Anspruch 11, wobei das Formteil Teil eines Hochspannungsschalters, Wechselrichters, Relais, elektronischen Verbinders, elektrischen Verbinders, Schutzschalters, einer Photovoltaikanlage, eines elektrischen Motors, eines Kühlkörpers, eines Ladegerätes oder Ladesteckers für elektrische Fahrzeuge, eines Elektroanschlusskastens, eines Smart Meter Gehäuses, eines Miniaturtrennschalters, einer Stromsammelschiene ist.

13. Verwendung von > 2,0 Gew.-% bis 6,0 Gew.-% Polyethylen, 2,5 bis < 8,0 Gew.-% phosphorhaltigem Flammschutzmittel und 0,2 bis 2,0 Gew.-% fluorhaltigem Antitropfmittel, wobei, wenn die Zusammensetzung > 4,0 Gew.-% Polyethylen enthält, mindestens 0,5 Gew.-% fluorhaltiges Antitropfmittel enthalten sind, und wobei sich die Gew.-%-Angaben auf die resultierende Gesamtzusammensetzung beziehen, zur Erzielung eines CTI von 600V und einer UL94 V0-Klassifizierung bei 3 mm bei einer thermoplastischen Zusammensetzung, enthaltend mindestens 70 Gew.-% aromatisches Polycarbonat.

14. EE-Bauteil, umfassend
einen ersten elektrischen Leiter und einen zweiten elektrischen Leiter in einem ersten Abstand d1 und einem zweiten Abstand d2 zueinander,
welche über eine thermoplastisches Zusammensetzung nach einem der Ansprüche 1 bis 10, die in direktem Kontakt mit dem ersten elektrischen Leiter und dem zweiten elektrischen Leiter steht, verbunden sind,
wobei der Abstand d1 die kürzeste Strecke zwischen dem ersten elektrischen Leiter und dem zweiten elektrischen Leiter entlang der Oberfläche der thermoplastischen Zusammensetzung ist und
wobei der Abstand d2 die kürzeste Strecke zwischen dem ersten elektrischen Leiter und dem zweiten elektrischen Leiter durch die Luft ist,
wobei d2 so ausgewählt ist, dass bei der jeweiligen Betriebsspannung ein Überschlag durch die Luft verhindert wird und
wobei d1 bei der nachfolgend aufgelisteten Betriebsspannung U beträgt:
d1i(0V ≤ U ≤ 250V): 1,3 mm bis < 2,5 mm
d1i(250 V < U ≤ 500 V) = 2,5 mm bis < 5,0 mm
d1iii(500 V < U ≤ 1000 V) = 5,0 mm bis < 10,0 mm.

15. Thermoplastische Zusammensetzung nach einem der Ansprüche 1 bis 10 oder Verwendung nach Anspruch 13, wobei das aromatische Polycarbonat Bisphenol A-basiertes Homopolycarbonat ist.

## Claims

1. Thermoplastic composition, containing
A) at least 70% by weight of aromatic polycarbonate,
B) > 2.0% by weight to 6.0% by weight of polyethylene,
C) 2.5% by weight to < 8.0% by weight of phosphorus-containing flame retardant,
D) 0.2% by weight to 2.0% by weight of fluorine-containing anti-drip agent,
wherein the composition is free of flame retardants selected from the group of alkali metal, alkaline earth metal or ammonium salts of aliphatic or aromatic sulfonic acid, sulfonamide or sulfonimide derivatives,
and wherein, if the composition contains > 4.0% by weight of polyethylene, at least 0.5% by weight of fluorine-containing anti-drip agent is present,
and wherein the % by weight figures are based on the overall composition.

2. Thermoplastic composition according to Claim 1, wherein the polyethylene is an HDPE, an HMWPE, a UHMWPE, or a mixture of these.

3. Thermoplastic composition according to Claim 1 or 2, wherein the phosphorus-containing flame retardant is an organophosphate, a phosphazene or a mixture of these.

4. Thermoplastic composition according to any of the preceding claims, wherein, as phosphorus-containing flame retardant, an organophosphate of formula (11) is present 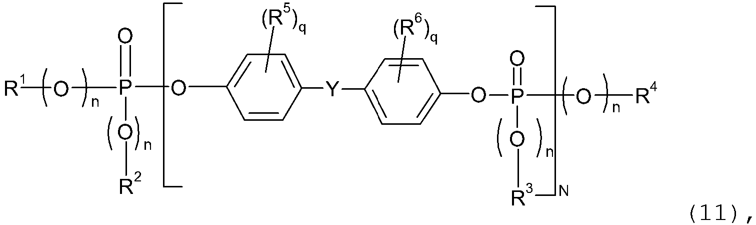 in which
R¹, R², R³ and R⁴ are each independently a linear or branched C₁- to C₈-alkyl radical and/or optionally linear- or branched-alkyl-substituted C₅- to C₆-cycloalkyl radical, C₆- to C₁₀-aryl radical or C₇- to C₁₂-aralkyl radical,
n is independently 0 or 1,
q is independently 0, 1, 2, 3 or 4,
N is a number between 1 and 30,
R₅ and R₆ are independently linear or branched C₁- to C₄-alkyl radical, preferably methyl radical, and
Y is linear or branched C₁- to C₇-alkylidene, a linear or branched C₁- to C₇-alkylene radical, C₅- to C₁₂-cycloalkylene radical, C₅- to C₁₂-cycloalkylidene radical, -O-, -S-, -SO-, SO₂ or -CO-.

5. Thermoplastic composition according to any of the preceding claims, wherein, as phosphorus-containing flame retardant, phosphazene of formula (13g) is present 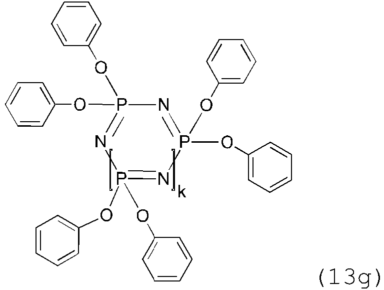 where k = 1, 2 or 3, including mixtures thereof.

6. Thermoplastic composition according to any of the preceding claims, containing 3% to 6% by weight of phosphorus-containing flame retardant.

7. Thermoplastic composition according to any of the preceding claims, wherein as further additive mould-release agent is present, as fluorine-containing anti-drip agent PTFE is present, and the amount of PTFE is at least 0.5% by weight.

8. Thermoplastic composition according to any of the preceding claims, containing 3% to 4% by weight of polyethylene.

9. Thermoplastic composition according to any of the preceding claims, containing up to 1.0% by weight of fluorine-containing anti-drip agent.

10. Thermoplastic composition according to any of the preceding claims, consisting of
A) at least 70% by weight of aromatic polycarbonate,
B) > 2.0% by weight to 6.0% by weight of polyethylene,
C) 2.5% by weight to < 8.0% by weight of phosphorus-containing flame retardant,
D) 0.2% by weight to 2.0% by weight of fluorine-containing anti-drip agent, wherein, if the composition contains > 4.0% by weight of polyethylene, at least 0.5% by weight of fluorine-containing anti-drip agent is present,
E) 0% to 5% by weight of one or more further additive(s), selected from the group consisting of heat stabilizers, antioxidants, mould-release agents, UV absorbers, IR absorbers, antistats, flame retardants different from component C, excluding alkali metal, alkaline earth metal or ammonium salts of aliphatic or aromatic sulfonic acid, sulfonamide or sulfonimide derivatives, optical brighteners, light-scattering agents, hydrolysis stabilizers, transesterification stabilizers, organic dyes, organic pigments, inorganic pigments, compatibilizers, flow improvers, additives for laser marking, and mixtures thereof.

11. Moulding consisting of, or comprising a region made from, a thermoplastic composition according to any of the preceding claims.

12. Moulding according to Claim 11, wherein the moulding is part of a high-voltage switch, inverter, relay, electronic connector, electrical connector, circuit breaker, a photovoltaic system, an electric motor, a heat sink, a charger or charging plug for electric vehicles, an electrical junction box, a smart meter housing, a miniature circuit breaker, a busbar.

13. Use of > 2.0% by weight to 6.0% by weight of polyethylene, 2.5% to < 8.0% by weight of phosphorus-containing flame retardant and 0.2% to 2.0% by weight of fluorine-containing anti-drip agent, wherein, if the composition contains > 4.0% by weight of polyethylene, at least 0.5% by weight of fluorine-containing anti-drip agent is present, and wherein the % by weight figures are based on the resulting overall composition, for attaining a CTI of 600 V and a UL94 V0 classification at 3 mm in a thermoplastic composition containing at least 70% by weight of aromatic polycarbonate.

14. EE component, comprising
a first electrical conductor and a second electrical conductor at a first distance d1 and a second distance d2 with respect to one another,
which are connected with each other via a thermoplastic composition according to any of Claims 1 to 10, which is in direct contact with the first electrical conductor and the second
wherein the distance d1 is the shortest distance between the first electrical conductor and the second electrical conductor along the surface of the thermoplastic composition and
wherein the distance d2 is the shortest distance between the first electrical conductor and the second electrical conductor through the air,
wherein d2 is selected in such a way that at the respective operating voltage a sparkover through the air is prevented and
wherein d1, at the operating voltage U listed below, is:
d1i(0 V ≤ U ≤ 250 V): 1.3 mm to < 2.5 mm d1ii(250 V < U ≤ 500 V) = 2.5 mm to < 5.0 mm d1iii(500 V < U ≤ 1000 V) = 5.0 mm to < 10.0 mm.

15. Thermoplastic composition according to any of Claims 1 to 10 or use according to Claim 13, wherein the aromatic polycarbonate is bisphenol A-based homopolycarbonate.

## Revendications

1. Composition thermoplastique, contenant
A) au moins 70 % en poids de polycarbonate aromatique,
B) > 2,0 % en poids à 6,0 % en poids de polyéthylène,
C) 2,5 % en poids à < 8,0 % en poids d'agent ignifuge contenant du phosphore,
D) 0,2 % en poids à 2,0 % en poids d'agent anti-gouttage contenant du fluor,
la composition étant exempte d'agents ignifuges sélectionnés dans le groupe des sels alcalins, alcalino-terreux ou d'ammonium de dérivés d'acides sulfoniques, de sulfonamides ou de sulfonimides aliphatiques ou aromatiques,
et, lorsque la composition contient > 4,0 % en poids de polyéthylène, au moins 0,5 % en poids d'agent anti-gouttage contenant du fluor étant contenus,
et les indications en % en poids se rapportant à la composition totale.

2. Composition thermoplastique selon la revendication 1, le polyéthylène étant un HDPE, un HMWPE, un UHMWPE ou un mélange de ceux-ci.

3. Composition thermoplastique selon la revendication 1 ou 2, l'agent ignifuge contenant du phosphore étant un organophosphate, un phosphazène ou un mélange de ceux-ci.

4. Composition thermoplastique selon l'une quelconque des revendications précédentes, un organophosphate de formule (11) étant contenu en tant qu'agent ignifuge contenant du phosphore 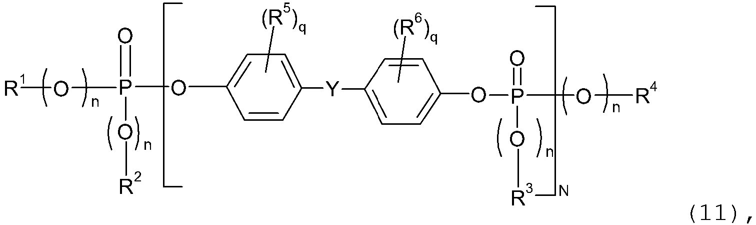 où
R¹, R², R³ et R⁴ signifient chacun indépendamment l'un de l'autre un radical alkyle linéaire ou ramifié en C₁ à C₈ et/ou un radical cycloalkyle en C₅ à C₆ éventuellement substitué par un alkyle linéaire ou ramifié, un radical aryle en C₆ à C₁₀ ou un radical aralkyle en C₇ à C₁₂,
les n signifient indépendamment les uns des autres 0 ou 1,
les q signifient indépendamment les uns des autres 0, 1, 2, 3 ou 4,
N est un nombre entre 1 et 30,
R₅ et R₆ signifient indépendamment l'un de l'autre un radical alkyle linéaire ou ramifié en C₁ à C₄, de préférence un radical méthyle, et
Y signifie un alkylidène linéaire ou ramifié en C₁ à C₇, un radical alkylène linéaire ou ramifié en C₁ à C₇, un radical cycloalkylène en C₅ à C₁₂, un radical cycloalkylidène en C₅ à C₁₂, -O-, -S-, -SO-, SO₂ ou -CO-.

5. Composition thermoplastique selon l'une quelconque des revendications précédentes, un phosphazène de formule (13g) étant contenu en tant qu'agent ignifuge contenant du phosphore 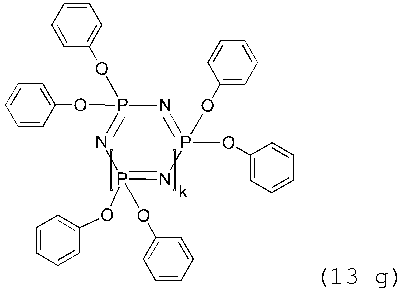 avec k = 1, 2 ou 3, y compris leurs mélanges.

6. Composition thermoplastique selon l'une quelconque des revendications précédentes, contenant 3 à 6 % en poids d'agent ignifuge contenant du phosphore.

7. Composition thermoplastique selon l'une quelconque des revendications précédentes, un agent de démoulage étant contenu en tant qu'additif supplémentaire, du PTFE étant contenu en tant qu'agent anti-gouttage contenant du fluor, et la quantité de PTFE étant d'au moins 0,5 % en poids.

8. Composition thermoplastique selon l'une quelconque des revendications précédentes, contenant 3 à 4 % en poids de polyéthylène.

9. Composition thermoplastique selon l'une quelconque des revendications précédentes, contenant jusqu'à 1,0 % en poids d'agent anti-gouttage contenant du fluor.

10. Composition thermoplastique selon l'une des revendications précédentes, constituée par
A) au moins 70 % en poids de polycarbonate aromatique,
B) > 2,0 % en poids à 6,0 % en poids de polyéthylène,
C) 2,5 % en poids à < 8,0 % en poids d'agent ignifuge contenant du phosphore,
D) 0,2 % en poids à 2,0 % en poids d'agent anti-gouttage contenant du fluor, au moins 0,5 % en poids d'agent anti-gouttage contenant du fluor étant contenus lorsque la composition contient > 4,0 % en poids de polyéthylène,
E) 0 à 5 % en poids d'un ou plusieurs additif(s) supplémentaire(s), sélectionné(s) dans le groupe constitué des thermostabilisants, des antioxydants, des agents de démoulage, des absorbeurs UV, des absorbeurs IR, des agents antistatiques, des agents ignifuges différents du composant C, à l'exception des sels alcalins, alcalino-terreux ou d'ammonium de dérivés d'acides sulfoniques, de sulfonamides ou de sulfonimides aliphatiques ou aromatiques, des azurants optiques, des agents diffusants de lumière, des stabilisants à l'hydrolyse, des stabilisants à la transestérification, des colorants organiques, des pigments organiques, des pigments inorganiques, des compatibilisants, des améliorants d'écoulement, des additifs de marquage laser et de leurs mélanges.

11. Pièce moulée constituée ou comprenant une zone d'une composition thermoplastique selon l'une quelconque des revendications précédentes.

12. Pièce moulée selon la revendication 11, la pièce moulée faisant partie d'un interrupteur haute tension, d'onduleur, d'un relais, d'un connecteur électronique, d'un connecteur électrique, d'un disjoncteur, d'une installation photovoltaïque, d'un moteur électrique, d'un dissipateur thermique, d'un chargeur ou d'une prise de charge pour véhicules électriques, d'une boîte de jonction électrique, d'un boîtier de compteur intelligent, d'un sectionneur miniature, d'une barre omnibus.

13. Utilisation de > 2,0 % en poids à 6,0 % en poids de polyéthylène, de 2,5 à < 8,0 % en poids d'agent ignifuge contenant du phosphore et de 0,2 à 2,0 % en poids d'agent anti-gouttage contenant du fluor, au moins 0,5 % en poids d'agent anti-gouttage contenant du fluor étant contenus lorsque la composition contient > 4,0 % en poids de polyéthylène, les indications en % en poids se rapportant à la composition totale résultante, pour obtenir un CTI de 600V et une classification UL94 V0 à 3 mm dans une composition thermoplastique contenant au moins 70 % en poids de polycarbonate aromatique.

14. Composant EE, comprenant
un premier conducteur électrique et un deuxième conducteur électrique à une première distance d1 et à une seconde distance d2 l'un de l'autre,
qui sont reliés par l'intermédiaire d'une composition thermoplastique selon l'une quelconque des revendications 1 à 10, qui est en contact direct avec le premier conducteur électrique et le deuxième
la distance d1 étant le chemin le plus court entre le premier conducteur électrique et le second conducteur électrique le long de la surface de la composition thermoplastique et
la distance d2 étant le chemin le plus court entre le premier conducteur électrique et le deuxième conducteur électrique à travers l'air,
d2 étant choisi de telle sorte qu'à la tension de fonctionnement respective, un contournement par l'air est évité, et
d1 valant, à la tension de fonctionnement U listée ci-dessous :
d1i(0V ≤ U ≤ 250V) : 1,3 mm à < 2,5 mm d1ii(250 V < U ≤ 500 V) = 2,5 mm à < 5,0 mm d1iii(500 V < U ≤ 1000 V) = 5,0 mm à < 10,0 mm.

15. Composition thermoplastique selon l'une quelconque des revendications 1 à 10 ou utilisation selon la revendication 13, le polycarbonate aromatique étant un homopolycarbonate à base de bisphénol A.
